# EUROPEAN PATENT APPLICATION

(11) **EP 4 561 137 A1**
(43) Date of publication of application: **28.05.2025**
(21) Application number: 23849137.7
(22) Date of filing: 30.06.2023
(51) Int. Cl.: H04W 12/122, H04W 28/02

(54) **ANOMALY DETECTION METHOD AND COMMUNICATION APPARATUS**

(30) Priority: 30.07.2022 CN 202210912458
(71) Applicant: Huawei Technologies Co., Ltd., Shenzhen, Guangdong 518129 (CN)
(72) Inventor: LI, Lun, Shenzhen, Guangdong 518129 (CN); WU, Yizhuang, Shenzhen, Guangdong 518129 (CN); CUI, Yang, Shenzhen, Guangdong 518129 (CN); SUN, Taoran, Shenzhen, Guangdong 518129 (CN)
(74) Representative: Pfenning, Meinig & Partner mbB
(86) International application number: PCT/CN2023/105067
(87) International publication number: WO 2024/027427

(57) **Abstract**

This application provides an exception detection method and a communication apparatus. The method includes: sending, to a first user plane network element, a request message for requesting to report a transmission status of first data of a terminal device; receiving the transmission status of the first data from the first user plane network element; when determining, based on an exception detection policy at a first level and the transmission status of the first data, that an exception at the first level exists in the terminal device, sending, to at least one user plane network element serving the terminal device, a request message for requesting to report a transmission status of second data of the terminal device; and determining, based on an exception detection policy at a second level and the transmission status of the second data, whether an exception at the second level exists in the first terminal device. Whether a terminal device is abnormal is determined based on exception detection policies at different levels and a data transmission status of the terminal device, so that "comprehensive detection" can be implemented for an exception of the terminal device, to improve accuracy of detecting an abnormal terminal device, thereby reducing a load of an analytics network element.

## Description

This application claims priority to Chinese Patent Application No. 202210912458.9, filed with the China National Intellectual Property Administration on July 30, 2022 and entitled "EXCEPTION DETECTION METHOD AND COMMUNICATION APPARATUS", which is incorporated herein by reference in its entirety.

### TECHNICAL FIELD

Embodiments of this application relate to the communication field, and more specifically, to an exception detection method and a communication apparatus.

### BACKGROUND

In a 5th generation (5th generation, 5G) communication system, a network data analytics function (network data analytics function, NWDAF) network element may analyze data generated by a terminal device on a network side (for example, an access and mobility management network element or a session management network element), and determine, by constructing a behavior profile of an analyzed object, whether behavior (for example, communication behavior) of the analyzed object is abnormal. The NWDAF may provide a data analytics (Analytics) result to a function network element (for example, a policy control function network element or the access and mobility management network element) on the network side, so that another network element makes a quick response based on the data analytics result, and blocks abnormal behavior of the analyzed object in a timely manner, for example, blocks abnormal communication of the terminal device.

To block abnormal behavior of terminal devices in a network as much as possible, an analytics network element (for example, the NWDAF) needs to perform "comprehensive detection" on the terminal devices in the network. In other words, the analytics network element needs to analyze behavior of as many terminal devices as possible in the network, to improve accuracy of detecting an abnormal terminal device. However, when behavior of a large quantity of terminal devices is analyzed, how to reduce a load of the analytics network element becomes an urgent problem to be resolved.

### SUMMARY

Embodiments of this application provide an exception detection method and a communication apparatus. According to the method, a load of an analytics network element can be reduced while behavior of a large quantity of terminal devices is analyzed.

According to a first aspect, an exception detection method is provided. The method includes: sending a first request message to a first user plane network element, where the first request message is used to request to report a transmission status of first data of a first terminal device; receiving the transmission status of the first data from the first user plane network element; when determining, based on an exception detection policy at a first level and the transmission status of the first data, that an exception at the first level exists in the first terminal device, sending a second request message to at least one user plane network element serving the first terminal device, where the second request message is used to request to report a transmission status of second data of the first terminal device; and determining, based on an exception detection policy at a second level and the transmission status of the second data, whether an exception at the second level exists in the first terminal device.

In the exception detection method provided in embodiment of this application, whether a terminal device is abnormal is determined according to exception detection policies at different levels and a data transmission status of the terminal device, so that "comprehensive detection" can be performed for an exception of a terminal device, to be specific, detection at a plurality of levels is performed on behavior of the terminal device, so that accuracy of detecting an abnormal terminal device can be improved, and a range of terminal devices detected by an analytics network element can be reduced, thereby reducing a load of the analytics network element.

With reference to the first aspect, in some implementations of the first aspect, the exception detection policy at the first level includes a correspondence between the transmission status of the first data and a first threshold for determining whether the exception at the first level exists, and the exception detection policy at the second level includes a correspondence between the transmission status of the second data and a second threshold for determining whether the exception at the second level exists.

With reference to the first aspect, in some implementations of the first aspect, the transmission status of the first data includes at least one of the following: a quantity of data packets of at least one session of the first terminal device in the first user plane network element, a transmission speed of the data packet of the at least one session of the first terminal device in the first user plane network element, a transmission dispersion of the data packet of the at least one session of the first terminal device in the first user plane network element, and a ratio between quantities of different types of data packets of the first terminal device in the first user plane network element.

With reference to the first aspect, in some implementations of the first aspect, the transmission status of the second data includes one or more of the following: a quantity of data packets of at least one session of the first terminal device in any one of the at least one user plane network element, a transmission speed of a data packet of at least one session of the first terminal device in any one of the at least one user plane network element, a transmission dispersion of a data packet of at least one session of the first terminal device in any one of the at least one user plane network element, or a ratio between quantities of different types of data packets of the first terminal device.

With reference to the first aspect, in some implementations of the first aspect, a first analytics network element sends the first request message to the first user plane network element, the first analytics network element receives the transmission status of the first data from the first user plane network element, and the first analytics network element determines that the exception at the first level exists in the first terminal device; and a second analytics network element sends the second request message to the at least one user plane network element, and the second analytics network element determines whether the exception at the second level exists in the first terminal device, where a service range of the first analytics network element is smaller than a service range of the second analytics network element.

With reference to the first aspect, in some implementations of the first aspect, the first analytics network element sends, to the second analytics network element, information indicating that the exception at the first level exists in the first terminal device.

With reference to the first aspect, in some implementations of the first aspect, if the second analytics network element determines that the exception at the second level exists in the first terminal device, the second analytics network element feeds back, to a policy control network element or an application function network element, information indicating that the exception at the second level exists in the first terminal device; or if the second analytics network element determines that the exception at the second level does not exist in the first terminal device, the second analytics network element feeds back, to a policy control network element or an application function network element, the information indicating that the exception at the first level exists in the first terminal device.

With reference to the first aspect, in some implementations of the first aspect, the first analytics network element receives information for requesting to analyze whether at least one terminal device is abnormal, where the at least one terminal device includes the first terminal device; and the first analytics network element sends the first request message to the first user plane network element based on the information for requesting to analyze whether the at least one terminal device is abnormal.

With reference to the first aspect, in some implementations of the first aspect, the method further includes: sending information for determining whether exception detection at the second level needs to be performed on the first terminal device; and receiving information indicating that the exception detection at the second level needs to be performed on the first terminal device.

With reference to the first aspect, in some implementations of the first aspect, the method further includes: determining a packet detection rule PDR at the first level according to the exception detection policy at the first level, where the PDR at the first level is used to detect the first data, and the first request message includes information indicating the PDR at the first level; and determining a PDR at the second level according to the exception detection policy at the second level, where the PDR at the second level is used to detect the second data, and the second request message includes information indicating the PDR at the second level.

According to a second aspect, an exception detection method is provided. The method includes: A first user plane network element receives a request message for requesting to determine a transmission status of first data of a first terminal device; the first user plane network element determines, based on an exception detection policy at a first level and the transmission status of the first data, that an exception at the first level exists in the first terminal device; the first user plane network element sends, to an analytics network element, information indicating that the exception at the first level exists in the first terminal device; the first user plane network element receives a second request message from the analytics network element, where the second request message is used to request to report a transmission status of second data of the first terminal device; and the first user plane network element reports the transmission status of the second data of the first terminal device to the analytics network element, where the transmission status of the second data is used to determine whether an exception at a second level exists in the first terminal device.

In the exception detection method provided in embodiments of this application, the first user plane network element may determine, according to an exception detection policy and a data transmission status of a terminal device, whether the terminal device is abnormal. When the terminal device is abnormal, the first user plane network element may further send the data transmission status of the terminal device to the analytics network element. In this way, the analytics network element determines whether an exception at another level exists in the terminal device, to implement "comprehensive detection" for an exception of a terminal device, to be specific, detection at a plurality of levels is performed on behavior of the terminal device, so that accuracy of detecting an abnormal terminal device can be improved, and a range of terminal devices detected by the analytics network element can be reduced, thereby reducing a load of the analytics network element.

With reference to the second aspect, in some implementations of the second aspect, the exception detection policy at the first level includes a correspondence between the transmission status of the first data and a first threshold for determining whether the exception at the first level exists.

With reference to the second aspect, in some implementations of the second aspect, the transmission status of the first data includes at least one of the following: a quantity of data packets of at least one session of the first terminal device in the first user plane network element, a transmission speed of the data packet of the at least one session of the first terminal device in the first user plane network element, a transmission dispersion of the data packet of the at least one session of the first terminal device in the first user plane network element, and a ratio between quantities of different types of data packets of the first terminal device in the first user plane network element.

With reference to the second aspect, in some implementations of the second aspect, the request message for requesting to determine the transmission status of the first data of the first terminal device includes information indicating a packet detection rule PDR at the first level, and the PDR at the first level is used to detect the first data; and the second request message includes information indicating a PDR at the second level, and the PDR at the second level is used to detect the second data.

According to a third aspect, an exception detection method is provided. The method includes: A first analytics network element sends a first request message to a first user plane network element, where the first request message is used to request to report a transmission status of first data of a first terminal device.

The first analytics network element receives the transmission status of the first data from the first user plane network element. When determining, based on an exception detection policy at a first level and the transmission status of the first data, that an exception at the first level exists in the first terminal device, the first analytics network element sends a second request message to at least one user plane network element serving the first terminal device, where the second request message is used to request to report a transmission status of second data of the first terminal device. The first analytics network element sends the transmission status of the second data to a second analytics network element, where the transmission status of the second data is used to determine whether an exception at a second level exists in the first terminal device.

In the exception detection method provided in embodiments of this application, the first analytics network element may determine, according to an exception detection policy and a data transmission status of a terminal device, whether the terminal device is abnormal. When the terminal device is abnormal, the first analytics network element may further send the data transmission status of the terminal device to the second analytics network element. In this way, the second analytics network element determines whether an exception at another level exists in the terminal device, to implement "comprehensive detection" for an exception of a terminal device, to be specific, detection at a plurality of levels is performed on behavior of the terminal device, so that accuracy of detecting an abnormal terminal device can be improved, and a range of terminal devices detected by the analytics network element can be reduced, thereby reducing a load of the analytics network element.

With reference to the third aspect, in some implementations of the third aspect, the exception detection policy at the first level includes a correspondence between the transmission status of the first data and a first threshold for determining whether the exception at the first level exists, and an exception detection policy at the second level includes a correspondence between the transmission status of the second data and a second threshold for determining whether the exception at the second level exists.

With reference to the third aspect, in some implementations of the third aspect, the transmission status of the first data includes at least one of the following: a quantity of data packets of at least one session of the first terminal device in the first user plane network element, a transmission speed of the data packet of the at least one session of the first terminal device in the first user plane network element, a transmission dispersion of the data packet of the at least one session of the first terminal device in the first user plane network element, and a ratio between quantities of different types of data packets of the first terminal device in the first user plane network element.

With reference to the third aspect, in some implementations of the third aspect, the transmission status of the second data includes one or more of the following: a quantity of data packets of at least one session of the first terminal device in any one of the at least one user plane network element, a transmission speed of a data packet of at least one session of the first terminal device in any one of the at least one user plane network element, a transmission dispersion of a data packet of at least one session of the first terminal device in any one of the at least one user plane network element, or a ratio between quantities of different types of data packets of the first terminal device.

With reference to the third aspect, in some implementations of the third aspect, the first analytics network element determines that the exception at the first level exists in the first terminal device.

With reference to the third aspect, in some implementations of the third aspect, the first analytics network element sends, to the second analytics network element, information indicating that the exception at the first level exists in the first terminal device.

With reference to the third aspect, in some implementations of the third aspect, the first analytics network element feeds back, to a policy control network element or the second analytics network element, information indicating that the exception at the second level exists in the first terminal device; or the first analytics network element feeds back, to a policy control network element or the second analytics network element, the information indicating that the exception at the first level exists in the first terminal device.

With reference to the third aspect, in some implementations of the third aspect, the first analytics network element receives information for requesting to analyze whether at least one terminal device is abnormal, where the at least one terminal device includes the first terminal device; and the first analytics network element sends the first request message to the first user plane network element based on the information for requesting to analyze whether the at least one terminal device is abnormal.

With reference to the third aspect, in some implementations of the third aspect, the first analytics network element determines a packet detection rule PDR at the first level according to the exception detection policy at the first level, where the PDR at the first level is used to detect the first data, and the first request message includes information indicating the PDR at the first level; and the first analytics network element determines a PDR at the second level according to the exception detection policy at the second level, where the PDR at the second level is used to detect the second data, and the second request message includes information indicating the PDR at the second level.

According to a fourth aspect, a communication apparatus is provided. The apparatus includes a transceiver unit and a processing unit. The transceiver unit is configured to receive a request message for requesting to determine a transmission status of first data of a first terminal device. The processing unit is configured to determine, based on an exception detection policy at a first level and the transmission status of the first data, that an exception at the first level exists in the first terminal device. The transceiver unit is further configured to send, to an analytics network element, information indicating that the exception at the first level exists in the first terminal device. The transceiver unit is further configured to receive a second request message from the analytics network element, where the second request message is used to request to report a transmission status of second data of the first terminal device. The transceiver unit is further configured to report the transmission status of the second data of the first terminal device to the analytics network element, where the transmission status of the second data is used to determine whether an exception at a second level exists in the first terminal device.

With reference to the fourth aspect, in some implementations of the fourth aspect, the exception detection policy at the first level includes a correspondence between the transmission status of the first data and a first threshold for determining whether the exception at the first level exists.

With reference to the fourth aspect, in some implementations of the fourth aspect, the transmission status of the first data includes at least one of the following: a quantity of data packets of at least one session of the first terminal device in the communication apparatus, a transmission speed of the data packet of the at least one session of the first terminal device in the communication apparatus, a transmission dispersion of the data packet of the at least one session of the first terminal device in the communication apparatus, and a ratio between quantities of different types of data packets of the first terminal device in the communication apparatus.

With reference to the fourth aspect, in some implementations of the fourth aspect, the request message for requesting to determine the transmission status of the first data of the first terminal device includes information indicating a packet detection rule PDR at the first level, and the PDR at the first level is used to detect the first data; and the second request message includes information indicating a PDR at the second level, and the PDR at the second level is used to detect the second data.

According to a fifth aspect, a communication apparatus is provided. The apparatus includes a transceiver unit and a processing unit. The transceiver unit is configured to send a first request message to a first user plane network element, where the first request message is used to request to report a transmission status of first data of a first terminal device. The transceiver unit is further configured to receive the transmission status of the first data from the first user plane network element. When it is determined, based on an exception detection policy at a first level and the transmission status of the first data, that an exception at the first level exists in the first terminal device, the transceiver unit is further configured to send a second request message to at least one user plane network element serving the first terminal device, where the second request message is used to request to report a transmission status of second data of the first terminal device. The processing unit is configured to determine, based on an exception detection policy at a second level and the transmission status of the second data, whether an exception at the second level exists in the first terminal device.

With reference to the fifth aspect, in some implementations of the fifth aspect, the exception detection policy at the first level includes a correspondence between the transmission status of the first data and a first threshold for determining whether the exception at the first level exists, and the exception detection policy at the second level includes a correspondence between the transmission status of the second data and a second threshold for determining whether the exception at the second level exists.

With reference to the fifth aspect, in some implementations of the fifth aspect, the transmission status of the first data includes at least one of the following: a quantity of data packets of at least one session of the first terminal device in the first user plane network element, a transmission speed of the data packet of the at least one session of the first terminal device in the first user plane network element, a transmission dispersion of the data packet of the at least one session of the first terminal device in the first user plane network element, and a ratio between quantities of different types of data packets of the first terminal device in the first user plane network element.

With reference to the fifth aspect, in some implementations of the fifth aspect, the transmission status of the second data includes one or more of the following: a quantity of data packets of at least one session of the first terminal device in any one of the at least one user plane network element, a transmission speed of a data packet of at least one session of the first terminal device in any one of the at least one user plane network element, a transmission dispersion of a data packet of at least one session of the first terminal device in any one of the at least one user plane network element, or a ratio between quantities of different types of data packets of the first terminal device.

With reference to the fifth aspect, in some implementations of the fifth aspect, the processing unit is further configured to determine that the exception at the first level exists in the first terminal device.

With reference to the fifth aspect, in some implementations of the fifth aspect, the transceiver unit is further configured to send, to a second analytics network element, information indicating that the exception at the first level exists in the first terminal device.

With reference to the fifth aspect, in some implementations of the fifth aspect, the transceiver unit is further configured to: feed back, to a policy control network element or the second analytics network element, information indicating that the exception at the second level exists in the first terminal device; or feed back, to a policy control network element or the second analytics network element, the information indicating that the exception at the first level exists in the first terminal device.

With reference to the fifth aspect, in some implementations of the fifth aspect, the transceiver unit is further configured to receive information for requesting to analyze whether at least one terminal device is abnormal, where the at least one terminal device includes the first terminal device; and the transceiver unit is specifically configured to send the first request message to the first user plane network element based on the information for requesting to analyze whether the at least one terminal device is abnormal.

With reference to the fifth aspect, in some implementations of the fifth aspect, the transceiver unit is further configured to: send information for determining whether exception detection at the second level needs to be performed on the first terminal device; and receive information indicating that the exception detection at the second level needs to be performed on the first terminal device.

With reference to the fifth aspect, in some implementations of the fifth aspect, the processing unit is further configured to: determine a packet detection rule PDR at the first level according to the exception detection policy at the first level, where the PDR at the first level is used to detect the first data, and the first request message includes information indicating the PDR at the first level; and determine a PDR at the second level according to the exception detection policy at the second level, where the PDR at the second level is used to detect the second data, and the second request message includes information indicating the PDR at the second level.

According to a sixth aspect, a communication apparatus is provided. The apparatus includes a transceiver unit. The transceiver unit is configured to send a first request message to a first user plane network element, where the first request message is used to request to report a transmission status of first data of a first terminal device. The transceiver unit is further configured to receive the transmission status of the first data from the first user plane network element. When it is determined, based on an exception detection policy at a first level and the transmission status of the first data, that an exception at the first level exists in the first terminal device, the transceiver unit is further configured to send a second request message to at least one user plane network element serving the first terminal device, where the second request message is used to request to report a transmission status of second data of the first terminal device. The transceiver unit is further configured to send the transmission status of the second data to a second analytics network element, where the transmission status of the second data is used to determine whether an exception at a second level exists in the first terminal device.

With reference to the sixth aspect, in some implementations of the sixth aspect, the exception detection policy at the first level includes a correspondence between the transmission status of the first data and a first threshold for determining whether the exception at the first level exists, and the exception detection policy at the second level includes a correspondence between the transmission status of the second data and a second threshold for determining whether the exception at the second level exists.

With reference to the sixth aspect, in some implementations of the sixth aspect, the transmission status of the first data includes at least one of the following: a quantity of data packets of at least one session of the first terminal device in the first user plane network element, a transmission speed of the data packet of the at least one session of the first terminal device in the first user plane network element, a transmission dispersion of the data packet of the at least one session of the first terminal device in the first user plane network element, and a ratio between quantities of different types of data packets of the first terminal device in the first user plane network element.

With reference to the sixth aspect, in some implementations of the sixth aspect, the transmission status of the second data includes one or more of the following: a quantity of data packets of at least one session of the first terminal device in any one of the at least one user plane network element, a transmission speed of a data packet of at least one session of the first terminal device in any one of the at least one user plane network element, a transmission dispersion of a data packet of at least one session of the first terminal device in any one of the at least one user plane network element, or a ratio between quantities of different types of data packets of the first terminal device.

With reference to the sixth aspect, in some implementations of the sixth aspect, the apparatus further includes a processing unit. The processing unit is configured to determine that the exception at the first level exists in the first terminal device.

With reference to the sixth aspect, in some implementations of the sixth aspect, the transceiver unit is further configured to send, to the second analytics network element, information indicating that the exception at the first level exists in the first terminal device.

With reference to the sixth aspect, in some implementations of the sixth aspect, the transceiver unit is further configured to feed back, to a policy control network element or the second analytics network element, information indicating that the exception at the second level exists in the first terminal device; or the transceiver unit is further configured to feed back, to a policy control network element or the second analytics network element, the information indicating that the exception at the first level exists in the first terminal device.

With reference to the sixth aspect, in some implementations of the sixth aspect, the transceiver unit is further configured to receive information for requesting to analyze whether at least one terminal is abnormal, where the at least one terminal includes the first terminal device; and the transceiver unit is specifically configured to send the first request message to the first user plane network element based on the information for requesting to analyze whether the at least one terminal is abnormal.

With reference to the sixth aspect, in some implementations of the sixth aspect, the processing unit is further configured to determine a packet detection rule PDR at the first level according to the exception detection policy at the first level, where the PDR at the first level is used to detect the first data, and the first request message includes information indicating the PDR at the first level; and the processing unit is further configured to determine a PDR at the second level according to the exception detection policy at the second level, where the PDR at the second level is used to detect the second data, and the second request message includes information indicating the PDR at the second level.

According to a seventh aspect, a communication system is provided. The system includes a first analytics network element and a second analytics network element. The first analytics network element is configured to send a first request message to a first user plane network element, where the first request message is used to request to report a transmission status of first data of a first terminal device. The first analytics network element is further configured to receive the transmission status of the first data from the first user plane network element. When determining, based on an exception detection policy at a first level and the transmission status of the first data, that an exception at the first level exists in the first terminal device, the second analytics network element is configured to send a second request message to at least one user plane network element serving the first terminal device, where the second request message is used to request to report a transmission status of second data of the first terminal device. The second analytics network element is further configured to determine, based on an exception detection policy at a second level and the transmission status of the second data, whether an exception at the second level exists in the first terminal device, where a service range of the first analytics network element is smaller than a service range of the second analytics network element.

With reference to the seventh aspect, in some implementations of the seventh aspect, the exception detection policy at the first level includes a correspondence between the transmission status of the first data and a first threshold for determining whether the exception at the first level exists, and the exception detection policy at the second level includes a correspondence between the transmission status of the second data and a second threshold for determining whether the exception at the second level exists.

With reference to the seventh aspect, in some implementations of the seventh aspect, the transmission status of the first data includes at least one of the following: a quantity of data packets of at least one session of the first terminal device in the first user plane network element, a transmission speed of the data packet of the at least one session of the first terminal device in the first user plane network element, a transmission dispersion of the data packet of the at least one session of the first terminal device in the first user plane network element, and a ratio between quantities of different types of data packets of the first terminal device in the first user plane network element.

With reference to the seventh aspect, in some implementations of the seventh aspect, the transmission status of the second data includes one or more of the following: a quantity of data packets of at least one session of the first terminal device in any one of the at least one user plane network element, a transmission speed of a data packet of at least one session of the first terminal device in any one of the at least one user plane network element, a transmission dispersion of a data packet of at least one session of the first terminal device in any one of the at least one user plane network element, or a ratio between quantities of different types of data packets of the first terminal device.

With reference to the seventh aspect, in some implementations of the seventh aspect, the first analytics network element is further configured to determine that the exception at the first level exists in the first terminal device; and the first analytics network element is further configured to send, to the second analytics network element, information indicating that the exception at the first level exists in the first terminal device.

With reference to the seventh aspect, in some implementations of the seventh aspect, if the second analytics network element determines that the exception at the second level exists in the first terminal device, the second analytics network element is further configured to feed back, to a policy control network element or an application function network element, information indicating that the exception at the second level exists in the first terminal device; or if the second analytics network element determines that the exception at the second level does not exist in the first terminal device, the second analytics network element is further configured to feed back, to a policy control network element or an application function network element, the information indicating that the exception at the first level exists in the first terminal device.

With reference to the seventh aspect, in some implementations of the seventh aspect, the first analytics network element is further configured to receive information for requesting to analyze whether at least one terminal is abnormal, where the at least one terminal includes the first terminal device. The first analytics network element is specifically configured to send the first request message to the first user plane network element based on the information for requesting to analyze whether the at least one terminal is abnormal.

With reference to the seventh aspect, in some implementations of the seventh aspect, the first analytics network element is further configured to determine a packet detection rule PDR at the first level according to the exception detection policy at the first level, where the PDR at the first level is used to detect the first data, and the first request message includes information indicating the PDR at the first level; and the second analytics network element is further configured to determine a PDR at the second level according to the exception detection policy at the second level, where the PDR at the second level is used to detect the second data, and the second request message includes information indicating the PDR at the second level.

According to an eighth aspect, a communication apparatus is provided. The communication apparatus includes a processor. The processor is coupled to a memory, and may be configured to execute instructions in the memory, to implement the method according to any one of the first aspect, the second aspect, the third aspect, and the possible implementations of the first aspect, the second aspect, and the third aspect. For example, the communication apparatus further includes the memory. The communication apparatus further includes a communication interface. The processor is coupled to the communication interface.

For example, the communication interface may be an input/output interface, and the input/output interface may be an input/output circuit. The transceiver may be a transceiver circuit.

According to a ninth aspect, a processor is provided. The processor includes an input circuit, an output circuit, and a processing circuit. The processing circuit is configured to: receive a signal through the input circuit; and transmit a signal through the output circuit, so that the processor performs the method according to any possible implementation of the first aspect to the third aspect.

**In** a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a tenth aspect, a processing apparatus is provided. The processing apparatus includes a processor and a memory. The processor is configured to: read instructions stored in the memory; receive a signal through a receiver; and transmit a signal through a transmitter, to perform the method according to any possible implementation of the first aspect to the third aspect.

For example, there is one or more processors, and there is one or more memories.

For example, the memory may be integrated with the processor, or the memory and the processor are separately disposed.

**In** a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process, for example, sending of indication information may be a process of outputting the indication information from the processor, and receiving of capability information may be a process of receiving the input capability information by the processor. Specifically, data output by the processor may be output to the transmitter, and input data received by the processor may be from the receiver. The transmitter and the receiver may be collectively referred to as a transceiver.

The processing apparatus in the tenth aspect may be one or more chips. The processor in the processing apparatus may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory. The memory may be integrated into the processor, or may be located outside the processor and exist independently.

According to an eleventh aspect, a computer program product is provided. The computer program product includes a computer program (which may also be referred to as code or instructions). When the computer program is run, a computer is enabled to perform the method according to any possible implementation of the first aspect to the third aspect.

According to a twelfth aspect, a computer-readable storage medium is provided. The computer-readable storage medium stores a computer program (which may also be referred to as code or instructions). When the computer program is run on a computer, the method according to any possible implementation of the first aspect to the third aspect is implemented.

### BRIEF DESCRIPTION OF DRAWINGS

FIG. 1 is a diagram of an application scenario to which a method according to embodiments of this application is applicable;
FIG. 2A, FIG. 2B, and FIG. 2C are a schematic flowchart of an exception detection method 200 according to this application;
FIG. 3A, FIG. 3B, and FIG. 3C are a schematic flowchart of another exception detection method 300 according to this application;
FIG. 4A, FIG. 4B, and FIG. 4C are a schematic flowchart of another exception detection method 400 according to this application;
FIG. 5A, FIG. 5B, and FIG. 5C are a schematic flowchart of another exception detection method 500 according to this application;
FIG. 6A, FIG. 6B, and FIG. 6C are a schematic flowchart of an exception detection method 600 according to an embodiment of this application;
FIG. 7 is a schematic flowchart of an exception detection method 700 according to another embodiment of this application;
FIG. 8 is a schematic flowchart of an exception detection method 800 according to another embodiment of this application;
FIG. 9 is a diagram of a communication apparatus according to an embodiment of this application;
FIG. 10 is a schematic block diagram of a communication apparatus according to another embodiment of this application; and
FIG. 11 is a diagram of a chip system according to an embodiment of this application.

### DESCRIPTION OF EMBODIMENTS

The following describes the technical solutions in embodiments of this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) communication system, or a future communication system, for example, a 6th generation (6th generation, 6G) communication system, or vehicle-to-x (vehicle-to-x, V2X), where V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), long term evolution-vehicle (long term evolution-vehicle, LTE-V), an internet of vehicles, machine type communication (machine type communication, MTC), an internet of things (internet of things, IoT), long term evolution-machine (long term evolution-machine, LTE-M), machine to machine (machine to machine M2M), and the like.

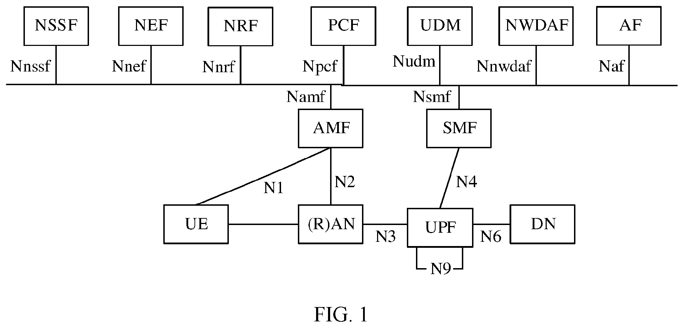

FIG. 1 is a diagram of a network architecture applicable to a method according to an embodiment of this application. The network architecture may specifically include the following network elements:
1. User equipments (user equipments, UEs) may include various handheld devices, vehicle-mounted devices, wearable devices, or computing devices that have a wireless communication function, or other processing devices connected to a wireless modem, and various forms of terminals, mobile stations (mobile stations, MSs), terminals (terminals), soft clients, or the like. For example, the user equipment may be a water meter, an electricity meter, or a sensor.

For example, the user equipment in embodiments of this application may be an access terminal, a subscriber unit, a subscriber station, a mobile station, a relay station, a remote station, a remote terminal, a mobile equipment, a user terminal (user terminal), a terminal device (terminal equipment), a wireless communication device, a user agent, or a user apparatus. The user equipment may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device that has a wireless communication function, another processing device connected to a wireless modem, a vehicle-mounted device, a wearable device, a user equipment in a 5G network, a user equipment in a future evolved public land mobile network (public land mobile network, PLMN), a user equipment in a future internet of vehicles, or the like. This is not limited in this application.

By way of example, and not limitation, in embodiments of this application, the wearable device may also be referred to as a wearable intelligent device, and is a generic term for wearable devices such as glasses, gloves, watches, clothes, and shoes that are developed by intelligently designing daily wearing by using wearable technologies. The wearable device is a portable device that is directly worn or integrated into clothes or an accessory of a user. Wearable devices are not only hardware devices, and can implement powerful functions through software support, data interaction, and cloud interaction. In a broad sense, intelligent wearable devices include full-featured and large-size devices, for example, smart watches or smart glasses, that can implement complete or partial functions without depending on smartphones, and devices, for example, various smart bands or smart jewelry used for monitoring physical signs, that dedicated to only one type of application and need to be used together with other devices such as smartphones.

In addition, the user equipment in embodiments of this application may alternatively be a user equipment in an internet of things (internet of things, IoT) system. The IoT is an important part of development of future information technologies. A main technical feature of the IoT is to connect an object to a network by using a communication technology, to implement an intelligent network of human-machine interconnection and thing-thing interconnection. In embodiments of this application, an IoT technology may implement massive connections, deep coverage, and terminal power saving by using, for example, a narrowband (narrowband, NB) technology. In addition, in embodiments of this application, the user equipment may further include a sensor, for example, a smart printer, a train detector, or a gas station. Main functions of the user equipment include: collecting data (for some user equipments), receiving control information and downlink data of an access network device, sending an electromagnetic wave, and transmitting uplink data to the access network device.

2. A (radio) access network (radio access network, (R)AN) device is configured to provide a network access function for authorized user equipments in a specific area, and can use transmission tunnels of different quality based on levels, service requirements, and the like of the user equipments.

The RAN can manage a radio resource and provide an access service to a user equipment, to complete forwarding of a control signal and user equipment data between the user equipment and a core network. The RAN may also be understood as a base station in a conventional network.

For example, the access network device in embodiments of this application may be any communication device that has a wireless transceiver function and that is configured to communicate with the user equipment. The access network device includes but is not limited to an evolved NodeB (evolved NodeB, eNB), a baseband unit (baseband unit, BBU); or an access point (access point, AP), a wireless relay node, a wireless backhaul node, a transmission point (transmission point, TP), or a transmission and reception point (transmission and reception point, TRP) in a wireless fidelity (wireless fidelity, Wi-Fi) system, or the like. The access network device may alternatively be a gNB or a transmission point (TRP or TP) in a 5G system, for example, an NR system, one or a group of antenna panels (including a plurality of antenna panels) of a base station in a 5G system. Alternatively, the access network device may be a network node that forms a gNB or a transmission point, for example, a baseband unit (BBU) or a distributed unit (distributed unit, DU).

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer eventually becomes information at the PHY layer, or is converted from the information at the PHY layer. Therefore, in the architecture, higher layer signaling, for example, RRC layer signaling, may also be considered as being sent by the DU or sent by the DU and the AAU. It may be understood that the access network device may be a device including one or more of a CU node, a DU node, or an AAU node. In addition, the CU may be classified as an access network device in an access network (radio access network, RAN), or the CU may be classified as an access network device in the core network (core network, CN). This is not limited in this application.

3. An access and mobility management function (access and mobility management function, AMF) network element is mainly configured for mobility management, access management, and the like, and may further be configured to implement a function other than session management in functions of a mobility management entity (mobility management entity, MME), for example, a function of access authorization/authentication.

4. A session management function (session management function, SMF) network element is mainly configured for session management, allocation and management of internet protocol (Internet protocol, IP) addresses of terminal devices, selection and management of a user plane function, termination of interfaces towards policy control and charging functions, downlink data notification, and the like.

5. A policy control function (policy control function, PCF) network element supports a unified policy framework to govern network behavior, and provides policy rules to another function network element (for example, the AMF or the SMF) or a terminal device in a network.

6. A user plane function (user plane function, UPF) network element is configured for packet routing and forwarding, quality of service (quality of service, QoS) handling for user plane data, or the like. User data may be accessed to a data network (data network, DN) through the UPF. In embodiments of this application, the UPF may be configured to implement a function of a user plane network element.

7. An application function (application function, AF) supports application influence on data routing, accessing a network exposure function network element, interacting with a policy framework for policy control, and the like.

8. A data network (data network, DN) is a network that provides data transmission, for example, an operator service network, an internet (internet), or a third-party service network.

9. A network data analytics function (network data analytics function, NWDAF) network element may have at least one of the following functions:
data collection, model training, model feedback, analytics result inference, and analytics result feedback. The data collection function may mean that the NWDAF collects data from a network function network element, a third-party server, a terminal device, or a network management system. The model training function may mean that the NWDAF performs analytics and training based on related input data to obtain a model (for example, a machine learning model). The model feedback function may mean that the NWDAF sends a trained machine learning model to a network element that supports an inference function. The analytics result inference function may mean that the NWDAF performs inference based on a trained machine learning model and inference data to determine a data analytics result. The analytics result feedback function may mean that the NWDAF provides a data analytics result for a network function network element, a third-party server, a terminal device, or a network management system. The data analytics result may assist a network in selecting a QoS parameter of a service, performing traffic routing, selecting a background traffic transmission policy, and the like.

An application scenario of the NWDAF is customization or optimization of a terminal parameter. To be specific, the NWDAF collects information about connection management, mobility management, session management, and accessed services of a user, and other information; evaluates and analyzes different types of users through reliable analytics and by using a prediction model, constructs a user profile; determines a movement track and a service usage habit of the user; and optimizes a mobility management parameter, a radio resource management parameter, and the like of the user. In addition, the NWDAF may further identify, based on the constructed user profile, whether a terminal device is abnormal.

In embodiments of this application, the NWDAF may be an independent network element, or may be integrated with another network element. For example, the NWDAF network element may be co-located with an AMF or co-located with an SMF.

In addition, the network architecture may further include a network exposure function (network exposure function, NEF) network element. The NEF is configured to securely expose, to the outside, a service, a capability, and the like that are provided by a 3rd generation partnership project (3GPP) network function. It should be understood that the foregoing enumerated network elements included in the communication system are merely examples for description, and this application is not limited thereto.

In the foregoing network architecture, an N2 interface is an interface between the RAN and the AMF network element and is configured to send a radio parameter, non-access stratum (non-access stratum, NAS) signaling, and the like. An N3 interface is an interface between the RAN and the UPF network element, and is configured to: transmit user plane data, and the like. An N4 interface is an interface between the SMF network element and the UPF network element and is configured to transmit information such as a service policy, tunnel identifier information of an N3 connection, data buffering indication information, and a downlink data notification message. An N6 interface is an interface between the DN and the UPF network element, and is configured to transmit user plane data.

It should be understood that, in the foregoing network architecture, information may be exchanged between network elements through a service-based interface. For example, the NWDAF may collect, from other network elements (for example, the AMF and the SMF) through service-based interfaces (for example, Namf and Nsmf) provided by the other network elements, data generated by a terminal on the network elements. The NWDAF may further provide a data analytics result, a model, data (data), and the like for another network element (for example, the AMF or the PCF) through an Nnwdaf interface.

It should be understood that the network architecture applicable to embodiments of this application is not limited thereto. Any network architecture that can implement the functions of the foregoing network elements is applicable to embodiments of this application.

It should be noted that names of the network elements and interfaces in this application are merely examples. This application does not exclude a case in which the network elements have other names and functions of the network elements are combined. With evolution of technologies, any device or network element that can implement the functions of the foregoing network elements falls within the protection scope of this application. In addition, the foregoing network element may also be referred to as an entity, a device, an apparatus, a module, or the like. This is not particularly limited in this application. In addition, in this application, for ease of understanding and description, the description of the "network element" is omitted in some descriptions. For example, an NWDAF network element is referred to as an NWDAF for short. In this case, the "NWDAF" should be understood as the NWDAF network element. Descriptions of same or similar cases are omitted below.

In the 5G communication system, an analytics network element may analyze data generated by a terminal device on a network side (for example, an access and mobility management network element or a session management network element), to identify whether behavior (for example, communication behavior) of the terminal device is abnormal. The analytics network element may provide a data analytics result for another network side network element (for example, a policy control function network element), so that the another network element can block abnormal behavior of the terminal device in a timely manner, for example, block communication of the abnormal terminal device.

To block abnormal behavior of terminal devices in a network as much as possible, an analytics network element needs to perform "comprehensive detection" on the terminal devices in the network. In other words, the analytics network element needs to analyze behavior of as many terminal devices as possible in the network, to improve accuracy of detecting an abnormal terminal device. However, when behavior of a large quantity of terminal devices is analyzed, how to reduce a load of the analytics network element becomes an urgent problem to be resolved.

The analytics network element may be the NWDAF in the network architecture shown in FIG. 1, or may be another network element having a data analytics function. This is not limited in this application.

In view of this, this application provides a communication method, so that an analytics network element can analyze behavior of a large quantity of terminal devices, and a load of the analytics network element is reduced. The analytics network element may provide a data analytics result for another network element (for example, a policy control function network element or an access and mobility management network element) on a network side, so that the another network element quickly responds based on the data analytics result, to block abnormal behavior of a terminal device in a timely manner.

For ease of understanding of embodiments of this application, the following descriptions are provided.

First, "first", "second", and various numeric numbers (for example, "#1" and "#2") shown in this application are merely for ease of description, and are for distinguishing between objects, but are not intended to limit the scope of embodiments of this application, for example, for distinguishing between different core network elements, but are not for describing a specific order or sequence. It should be understood that the objects described in such a way are interchangeable in an appropriate circumstance, so that a solution other than embodiments of this application can be described.

Second, "preset", "preconfiguration", and the like in embodiments of this application may be implemented by pre-storing corresponding code or a table in a device (for example, a network device) or in another manner that may indicate related information. A specific implementation of "preset", "preconfiguration", and the like is not limited in this application, for example, a preset exception detection policy and a preset threshold in embodiments of this application.

Third, the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

The following describes in detail the method provided in embodiments of this application with reference to the accompanying drawings. Embodiments of this application may be applied to the network architecture shown in FIG. 1. This is not limited.

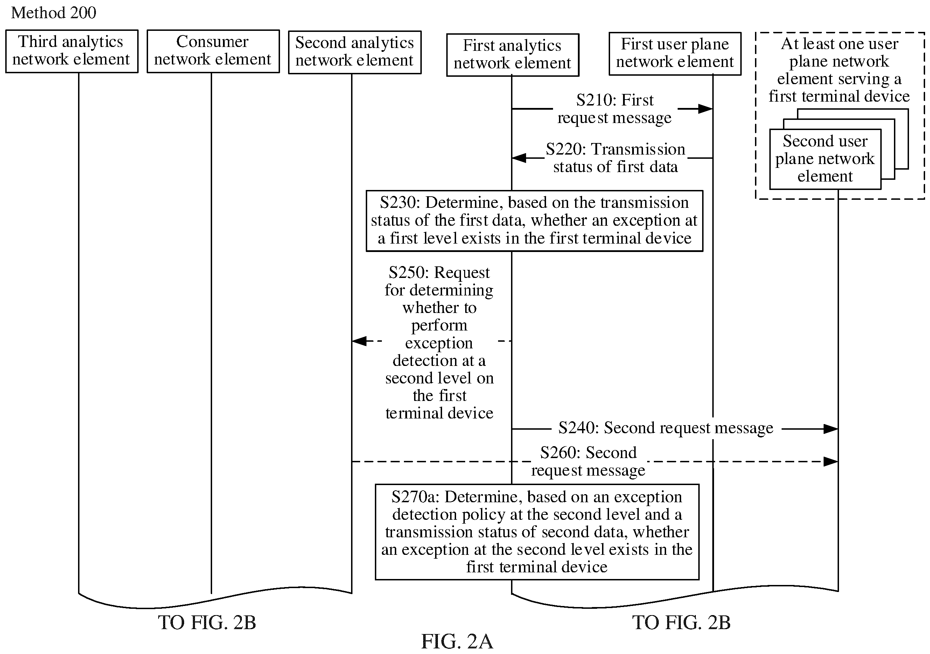

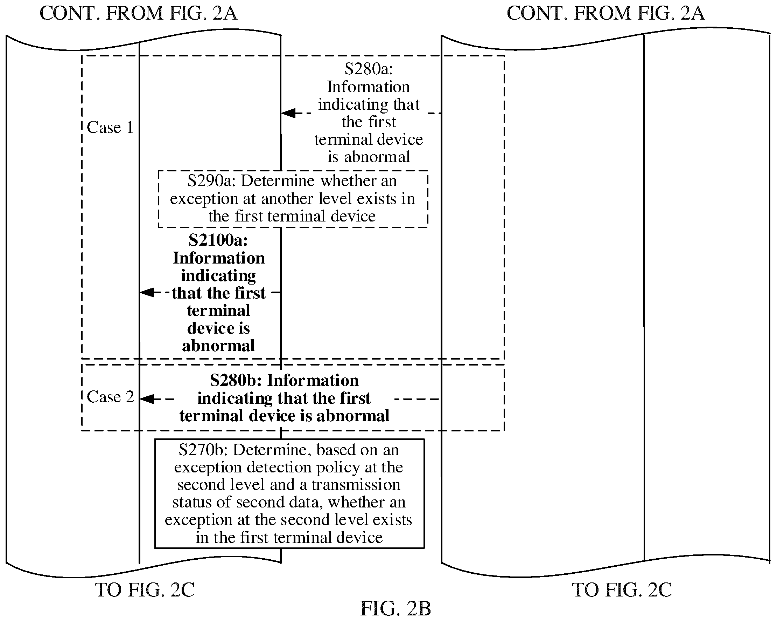

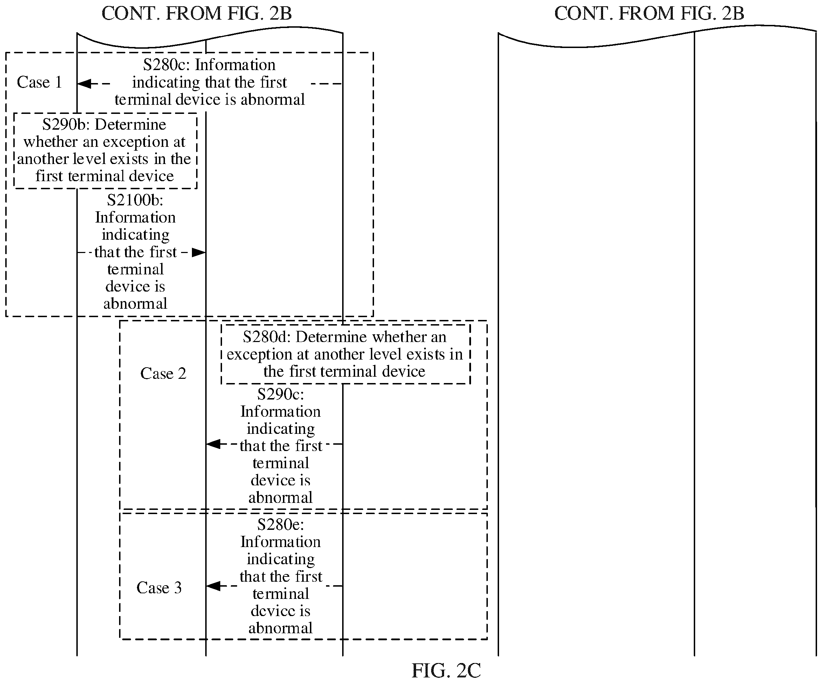

FIG. 2A, FIG. 2B, and FIG. 2C are a diagram of an exception detection method 200 according to an embodiment of this application. The method 200 may include the following steps.

S210: A first analytics network element sends a first request message to a first user plane network element, where the first request message is used to request to report a transmission status of first data of a first terminal device.

Correspondingly, the first user plane network element receives the first request message from the first analytics network element.

The first data may include a data packet of at least one session of the first terminal device in the first user plane network element.

The transmission status of the first data of the first terminal device may include at least one of the following: a quantity of data packets of at least one session of the first terminal device in the first user plane network element, a transmission speed of the data packet of the at least one session of the first terminal device in the first user plane network element, a transmission dispersion of the data packet of the at least one session of the first terminal device in the first user plane network element, and a ratio between quantities of different types of data packets of the first terminal device in the first user plane network element, where the different types of data packets are different types of data packets in the data packets of the at least one session.

For example, the at least one session of the first terminal device may include a session initiated by the first terminal device. For example, if the first terminal device initiates a call to at least one called terminal device, and the first terminal device initiates the call to the called terminal device by initiating a first session, the at least one session of the first terminal device includes the first session. The at least one session of the first terminal device may further include a session initiated by another terminal device to the first terminal device, and there may be one or more other terminal devices. For example, if another terminal device initiates a call to the first terminal device, and the another terminal device initiates the call to the first terminal device by initiating a second session, the at least one session of the first terminal device includes the second session.

A specific type of the at least one session is not limited in this application. For example, in this application, the first session is not limited to a session for a call initiated by the first terminal device, and the first session may alternatively be a session of another type initiated by the first terminal device. For example, the first terminal device initiates a session for an SMS message to another terminal device. Similarly, in this application, a specific type of the second session is not limited, and the second session may alternatively be a session used by another terminal device to initiate an SMS message to the first terminal device.

It may be understood that the data packet of the at least one session of the first terminal device is transmitted through the first user plane network element.

For example, after receiving the data packet of the at least one session from the first terminal device, the first user plane network element forwards the data packet of the at least one session to a destination terminal device in the first user plane network element based on a destination address carried in the data packet of the at least one session, or sends the data packet of the at least one session to a network side device through an N6 interface, or sends the data packet of the at least one session to another user plane function network element through an N19 interface. Similarly, the first user plane network element may further forward, to the first terminal device, a data packet of at least one session from a terminal device in the first user plane network element, a data packet of at least one session from a network side device, or a data packet of at least one session from another user plane function network element.

The following describes the transmission status of the first data by using an example in which the at least one session includes the first session. The first session is a session used by the first terminal device to initiate a call to a peer terminal device. For ease of description, data of the first session is denoted as the first data, and the first data may include a data packet indicating that the first terminal device initiates a call to the peer terminal device, and is denoted as a first data packet. The first data may further include a data packet that is sent by the peer terminal device and that is for responding to the call initiated by the first terminal device, and is denoted as a second data packet.

The transmission status of the first data may include at least one of the following:
(1) a quantity of first data packets, where
   the quantity of first data packets may reflect a quantity of calls initiated by the first terminal device to the another terminal device;
(2) a transmission speed of the first data packet, where
   the transmission speed of the first data packet may be understood as a quantity of transmitted first data packets in a preset time period;
(3) a transmission dispersion of the first data packet, where
   the transmission dispersion of the first data packet may be understood as a dispersion of an object represented by a field in the first data packet;
   for example, a field of the first data packet indicates a destination address for transmission, in other words, the transmission dispersion of the first data packet may include a dispersion of the destination address of the first data packet; and
   for another example, another field of the first data packet indicates a mobile equipment (mobile equipment, ME) used by the first terminal device, in other words, the transmission dispersion of the first data packet may include a span of an identifier of the ME of the first data packet;
(4) a quantity of some of second data packets, where
   for example, the some data packets may indicate that the peer terminal device rejects calls initiated by the first terminal device, and the quantity of some data packets may reflect a quantity of calls that are initiated by the first terminal device and that are rejected (canceled); and
   for another example, the some data packets may indicate that the peer terminal device hangs up calls initiated by the first terminal device, and the quantity of some data packets may reflect a quantity of calls that are initiated by the first terminal device and that are hung up (bye); and
(5) a ratio between quantities of different types of data packets in the first data, where
   the ratio between the quantities of different types of data packets in the first data may be, for example, a ratio of the quantity of first data packet to a quantity of second data packets,
   for example, a ratio of a quantity of some of the second data packets to the total quantity of first data packets, where the some of the second data packets may indicate that some peer terminal devices reject calls initiated by the first terminal device, and the ratio of the quantity of some of the second data packets to the total quantity of first data packets may indicate a ratio of a quantity of calls that are initiated by the first terminal device and that are rejected to the total quantity of calls initiated by the first terminal device; and
   for another example, some of the second data packets may indicate that some peer terminal devices hang up calls initiated by the first terminal device, and a ratio of a quantity of some of the second data packets to the total quantity of first data packets may indicate a ratio of a quantity of calls that are initiated by the first terminal device and that are hung up to the total quantity of calls initiated by the first terminal device.

The foregoing uses only the first data of the first session as an example to describe the transmission status of the first data in this embodiment of this application. It may be understood that, in this embodiment of this application, the first data is not limited to the data of the first session. For example, the first data may further include data of the second session, a transmission status of the data of the second session is similar to the transmission status of the first data of the first session. For brevity, details are not described again.

It may be understood that the transmission status of the first data of the first terminal device may be used to determine whether an exception at a first level exists in the first terminal device. The exception at the first level may be understood as an exception determined based on the transmission status of the first data.

For example, the transmission status of the first data includes a quantity of transmitted first data packets. When the quantity of transmitted first data packets is greater than a threshold, it may be determined that the exception at the first level may exist in the first terminal device. The quantity of transmitted first data packets may reflect a quantity of calls initiated by the first terminal device to the another terminal device. To be specific, when the quantity of calls initiated by the first terminal device to the another terminal device is greater than the threshold, the exception at the first level may exist in the first terminal device.

For another example, the transmission status of the first data includes a quantity of some of the second data packets. For example, the some data packets may indicate some calls that are initiated by the first terminal device and that are rejected by the peer terminal device. When the quantity of some data packets is greater than a threshold, it may be determined that the exception at the first level may exist in the first terminal device. In other words, when a quantity of calls that are initiated by the first terminal device to the another terminal device and that are rejected is greater than the threshold, the exception at the first level may exist in the first terminal device.

The first analytics network element may be a session management network element, and is denoted as a first session management network element for ease of differentiation. **In** other words, the first session management network element sends the first request message to the first user plane network element, to request to report the transmission status of the first data of the first terminal device.

The first request message may carry information indicating a packet detection rule (packet detection rule, PDR) at the first level, where the PDR at the first level is used by the first user plane network element to match the first data of the first terminal device, in other words, the PDR at the first level is used by the first user plane network element to detect the first data. The PDR at the first level may be preconfigured in the first user plane network element, or may be sent by the first session management network element to the first user plane network element by using the first request message.

In a possible implementation, before sending the first request message to the first user plane network element, the first session management network element receives a third request message from a second analytics network element, where the third request message is used to request to detect whether at least one terminal device is abnormal, and the at least one terminal device includes the first terminal device. The first session management network element sends the first request message to the first user plane network element based on the third request message.

The second analytics network element may be a network data analytics function network element, and is denoted as a first network data analytics function network element for ease of differentiation. The first network data analytics function network element may analyze data on at least one session management network element, and the at least one session management network element includes the first session management network element.

For example, the third request message may carry an identifier of the at least one terminal device; or the third request message carries indication information indicating to detect whether at least one terminal device managed by the first session management network element is abnormal, and the at least one terminal device managed by the first session management network element includes the first terminal device.

The third request message may further carry indication information indicating an exception level of exception detection to be performed on the at least one terminal device. For example, the exception level may include the first level and a second level. When the indication information indicates that the level of the detection to be performed on the at least one terminal device is a high level, for example, the second level, the first session management network element may first start exception detection at a low level, for example, the first level, by default.

S220: The first user plane network element sends the transmission status of the first data to the first analytics network element.

Correspondingly, the first analytics network element receives the transmission status of the first data from the first user plane network element.

S230: The first analytics network element determines, based on the transmission status of the first data, whether the exception at the first level exists in the first terminal device.

Specifically, the first analytics network element may determine, based on an exception detection policy at the first level and the transmission status of the first data, whether the exception at the first level exists in the first terminal device.

The exception detection policy at the first level includes a correspondence between the transmission status of the first data and a first threshold for determining whether the exception at the first level exists. The correspondence between the transmission status of the first data and the first threshold may be that the transmission status of the first data is greater than, equal to, or less than the first threshold.

For example, the transmission status of the first data includes a quantity of first data packets, and the quantity of first data packets may represent a quantity of calls initiated by the first terminal device to the another terminal device. The first threshold may be a preset upper limit of the quantity of calls initiated by the terminal device. The correspondence between the transmission status of the first data and the first threshold may be that the quantity of first data packets is greater than or equal to the first threshold. When the quantity of calls initiated by the first terminal device to the another terminal device is greater than or equal to the first threshold, it may be determined that the exception at the first level may exist in the first terminal device.

In the foregoing example, for related descriptions of the first data packet and the second data packet, refer to the descriptions of S210.

In this embodiment of this application, the exception detection policy is a policy used for exception detection. In this embodiment of this application, the exception detection policy may include a correspondence between a data transmission status and a threshold. In other words, whether a terminal device is abnormal may be determined by determining the correspondence between the data transmission status and the threshold. It should be understood that the exception detection policy may also be referred to as a security policy, and a name of the exception detection policy does not limit the protection scope of embodiments of this application.

S240: The first analytics network element sends a second request message to at least one user plane network element serving the first terminal device, where the second request message is used to request to report a transmission status of second data of the first terminal device.

Correspondingly, any user plane network element (for example, a second user plane network element) in the at least one user plane network element is used as an example. The second user plane network element receives the second request message from the first analytics network element.

The second request message may carry information indicating a PDR at the second level, where the PDR at the second level is used by the second user plane network element to match the second data of the first terminal device, in other words, the PDR at the second level is used by the second user plane network element to detect the second data.

The at least one user plane network element serving the first terminal device may be understood as that the second data of the first terminal device is transmitted through the at least one user plane network element. The second user plane network element is used as an example. That the second user plane network element serves the first terminal device means that data sent by the first terminal device may be transmitted through the second user plane network element, or data received by the first terminal device may be transmitted through the second user plane network element.

The second data may include a data packet of at least one session of the first terminal device in the second user plane network element.

The transmission status of the second data of the first terminal device may include at least one of the following: a quantity of data packets of at least one session of the first terminal device in the second user plane network element, a transmission speed of the data packet of the at least one session of the first terminal device in the second user plane network element, a transmission dispersion of the data packet of the at least one session of the first terminal device in the second user plane network element, and a ratio between quantities of different types of data packets of the first terminal device in the second user plane network element, where the different types of data packets are different types of data packets in the data packets of the at least one session.

For the at least one session of the first terminal device, refer to the descriptions of S210. The transmission status of the second data is similar to the transmission status of the first data. Details are not described again.

In other words, data (including the first data and the second data) of the first terminal device is transmitted through the at least one user plane network element. When whether the exception at the first level exists in the first terminal device needs to be determined, the first analytics network element may send the first request message to a user plane network element (for example, the first user plane network element) serving the first terminal device, to request the transmission status of the first data of the first terminal device, where the first data may include the data packet of the at least one session of the first terminal device in the first user plane network element. When determining, based on the transmission status of the first data and the exception detection policy at the first level, that the exception at the first level exists in the first terminal device, the first analytics network element may send the second request message to the at least one user plane network element serving the first terminal device, to request the transmission status of second data of the first terminal device, where the second data includes a data packet of at least one session of the first terminal device in the at least one user plane network element.

It may be understood that, in comparison with the transmission status of the first data from the first user plane network element, the transmission status of the second data may be from a wider source, to be specific, the transmission status of the second data may be from a plurality of user plane network elements serving the first terminal device. In other words, analyzing, based on the transmission status of the second data, whether the first terminal device is abnormal may be more difficult than analyzing, based on the transmission status of the first data, whether the first terminal device is abnormal, where the difficulty of analyzing whether the first terminal device is abnormal may be measured, for example, by using a calculation amount or a size of a required resource. In other words, the transmission status of the second data may be more complex than that of the first data. For example, when the transmission statuses include total quantities of data packets, the total quantity of data packets of the second data may be greater than the total quantity of data packets of the first data.

In a possible case, the at least one user plane network element includes the first user plane network element.

In other words, the first analytics network element requests the transmission status of the first data of the first terminal device through the first user plane network element; and when the first user plane network element determines, based on the transmission status of the first data, that the first terminal device is abnormal, the first analytics network element may request the transmission status of the second data of the first terminal device from the at least one user plane network element including the first user plane network element.

In this case, optionally, the first analytics network element may send a request message to the first user plane network element, where the request message is used to request the transmission status of the first data and the transmission status of the second data of the first terminal device. In other words, in S210, the first request message may be further used to request the transmission status of the second data of the first terminal device.

In another possible case, the at least one user plane network element does not include the first user plane network element.

In other words, the first analytics network element requests the transmission status of the first data of the first terminal device through the first user plane network element; and when the first user plane network element determines, based on the transmission status of the first data, that the first terminal device is abnormal, the first analytics network element may request the transmission status of the second data of the first terminal device from a user plane network element that is other than the first user plane network element and that serves the first terminal device.

Optionally, in S250, before the first analytics network element sends the second request message to the second user plane network element, the first analytics network element sends, to a first network element, a request for determining whether to perform exception detection at the second level on the first terminal device.

The request may carry information indicating that the exception at the first level exists in the first terminal device.

When the first network element determines to perform the exception detection at the second level on the first terminal device, the first analytics network element receives, from the first network element, indication information indicating to perform the exception detection at the second level on the first terminal device; and the first analytics network element sends the second request message to the second user plane network element based on the indication information.

The first network element may include at least one of the second analytics network element and a consumer network element. The second analytics network element may be the first network data analytics function network element in S210. The consumer network element may be an application function network element or a policy control function network element.

Optionally, in S260, when the second analytics network element determines to perform the exception detection at the second level on the first terminal device, the second analytics network element sends the second request message to the second user plane network element. It may be understood that, in this case, S240 may not be performed.

For example, the second analytics network element may send the second request message to the second user plane network element through the first analytics network element.

S270a: The first analytics network element determines, based on an exception detection policy at the second level and the transmission status of the second data, whether an exception at the second level exists in the first terminal device.

For example, if the first analytics network element sends the second request message to the second user plane network element (S240), the first analytics network element may receive the transmission status of the second data from the second user plane function network element. The first analytics network element determines, based on the exception detection policy at the second level and the transmission status of the second data, whether the exception at the second level exists in the first terminal device.

Specifically, the first analytics network element may determine, based on the exception detection policy at the second level and the transmission status of the second data, whether the exception at the second level exists in the first terminal device. The exception detection policy at the second level includes a correspondence between the transmission status of the second data and a second threshold for determining whether the exception at the second level exists.

For example, the transmission status of the second data includes a transmission dispersion, of the first data packet, from the at least one user plane network element, the transmission dispersion of the first data packet may include a dispersion of a destination address of the first data packet. When the dispersion of the destination address of the first data packet is greater than the second threshold, it may be determined that the exception at the second level may exist in the first terminal device.

For another example, the transmission status of the second data includes a ratio, of a quantity of some of second data packets to a total quantity of first data packets, from the at least one user plane network element, and the ratio of the quantity of some of the second data packets to the total quantity of first data packets may indicate a ratio of a quantity of calls that are initiated by the first terminal device and that are rejected to a total quantity of calls initiated by the first terminal device. When the ratio of the quantity of calls that are initiated by the first terminal device and that are rejected to the total quantity of calls initiated by the first terminal device is greater than the second threshold, it may be determined that the exception at the second level may exist in the first terminal device.

In the foregoing example, for related descriptions of the first data packet and the second data packet, refer to the descriptions of S210.

Alternatively, in S270b, the second analytics network element determines, based on an exception detection policy at a second level and the transmission status of the second data, whether an exception at the second level exists in the first terminal device.

For example, if the second analytics network element sends the second request message to the second user plane network element (S260), the second analytics network element may receive the transmission status of the second data from the second user plane function network element. The second analytics network element determines, based on the exception detection policy at the second level and the transmission status of the second data, whether the exception at the second level exists in the first terminal device. Alternatively, the first analytics network element may send the transmission status of the second data of the first terminal device to the second analytics network element, and the second analytics network element determines, based on to the exception detection policy at the second level and the transmission status of the second data, whether the exception at the second level exists in the first terminal device.

For a specific process in which the second analytics network element determines, based on the exception detection policy at the second level and the transmission status of the second data, whether the exception at the second level exists in the first terminal device, refer to S270a. Details are not described again.

If the first analytics network element determines whether the exception at the second level exists in the first terminal device (S270a), subsequent steps may include two cases.

### Case 1

S280a: The first analytics network element sends, to the second analytics network element, information indicating that the first terminal device is abnormal.

The information indicating that the first terminal device is abnormal may include at least one of information indicating that the exception at the second level exists in the first terminal device and information indicating that the exception at the first level exists in the first terminal device.

For example, if the first analytics network element determines that the exception at the second level exists in the first terminal device, the information indicating that the first terminal device is abnormal may include the information indicating that the exception at the second level exists in the first terminal device, or the information indicating that the first terminal device is abnormal may include the information indicating that the exception at the second level exists in the first terminal device and the information indicating that the exception at the first level exists in the first terminal device. If the first analytics network element determines that the exception at the second level does not exist in the first terminal device, the information indicating that the first terminal device is abnormal may include the information indicating that the exception at the first level exists in the first terminal device.

S290a: The second analytics network element determines whether an exception at another level exists in the first terminal device.

For example, the second analytics network element may determine, in a manner in the conventional technology, whether the first terminal device is abnormal. For a procedure in which the second analytics network element determines whether the first terminal device is abnormal, refer to descriptions in 3GPP TS 23.288.

For example, the second analytics function network element may request access data, location data, and the like of the first terminal device from an access and mobility management network element, and the second analytics network element determines, based on the access data, the location data, and the like, whether the exception at the another level exists in the first terminal device.

The second analytics network element may alternatively determine, according to an exception detection policy at the another level, whether the exception at the another level exists in the first terminal device.

For example, the second analytics network element determines, according to an exception detection policy at a third level and the transmission status of the second data, whether the first terminal device is abnormal. The exception detection policy at the third level may include a correspondence between the transmission status of the second data of the first terminal device and a threshold for determining whether the terminal device is abnormal. The transmission status, of the second data, included in the exception detection policy at the third level may be different from the transmission status, of the second data, included in the exception detection policy at the second level. For example, the exception detection policy at the second level includes a quantity of third data packets and a transmission speed of the third data packet. The exception detection policy at the third level may include a transmission dispersion of the third data packet, where the third data packet may be a data packet of at least one session of any one of the at least one user plane network element serving the first terminal device. The transmission status of the second data of the first terminal device may be sent by the first analytics network element to the second analytics network element.

S2100a: The second analytics network element sends, to a consumer network element, the information indicating that the first terminal device is abnormal.

The consumer network element may include at least one of an application function network element and a policy control function network element.

When the exception at the another level exists in the first terminal device, the second analytics network element may send, to the consumer network element, information indicating that the exception at the another level exists in the first terminal device. Optionally, the second analytics network element may further send, to the consumer network element, at least one of the information indicating that the exception at the second level exists in the first terminal device and the information indicating that the exception at the first level exists in the first terminal device.

It should be noted that S280a to S2100a are optional steps.

### Case 2

Optionally, in S280b, the first analytics network element sends, to a consumer network element, information indicating that the first terminal device is abnormal.

For the information indicating that the first terminal device is abnormal, refer to the information that indicates that the first terminal device is abnormal and that is sent by the first analytics network element to the second analytics network element in S280a. Details are not described again.

In other words, when the first analytics network element determines that the first terminal device is abnormal, the first analytics network element may feed back, to the second analytics network element, the information indicating that the first terminal device is abnormal, the second analytics network element further analyzes whether an exception at another level exists in the first terminal device, and the second analytics network element feeds back, to the consumer network element, the information indicating that the first terminal device is abnormal; or the first analytics network element may directly feed back, to the consumer network element, the information indicating that the terminal device is abnormal.

If the second analytics network element determines whether the exception at the second level exists in the first terminal device (S270b), subsequent steps may include three cases.

### Case 1

S280c: The second analytics network element sends, to a third analytics network element, information indicating that the first terminal device is abnormal.

The third analytics network element may be a network data analytics function network element. In this case, the second analytics network element is managed by the third analytics network element, in other words, a service range of the third analytics network element is greater than a service range of the second analytics network element.

For the information indicating that the first terminal device is abnormal, refer to the descriptions of S280a.

S290b: The third analytics network element analyzes whether an exception at another level exists in the first terminal device.

This step is similar to S290a. Details are not described again.

S2100b: The third analytics network element sends, to a consumer network element, the information indicating that the first terminal device is abnormal.

This step is similar to S2100a. Details are not described again.

It should be noted that S280c, S290b, and S2100b are optional steps.

### Case 2

S280d: The second analytics network element determines whether an exception at another level exists in the first terminal device.

For determining, by the second analytics network element, whether the exception at the another level exists in the first terminal device, refer to the descriptions of determining, by the second analytics network element, whether the exception at the another level exists in the first terminal device in S290a.

S290c: The second analytics network element sends, to a consumer network element, the information indicating that the first terminal device is abnormal.

This step is similar to S2100a. Details are not described again.

It should be noted that S280d and S290c are optional steps.

### Case 3

Optionally, in S280e, the second analytics network element sends, to a consumer network element, information indicating that the first terminal device is abnormal.

For the information indicating that the first terminal device is abnormal, refer to the information that indicates that the first terminal device is abnormal and that is sent by the first analytics network element to the second analytics network element in S280a. Details are not described again.

In other words, when the second analytics network element determines that the first terminal device is abnormal, the second analytics network element may feed back, to a third analytics network element, the information indicating that the first terminal device is abnormal, the third analytics network element further analyzes whether an exception at another level exists in the first terminal device, the third analytics network element feeds back, to the consumer network element, the information indicating that the first terminal device is abnormal; when the second analytics network element determines that the first terminal device is abnormal, the second analytics network element further analyzes whether an exception at another level exists in the first terminal device, and the second analytics network element feeds back, to the consumer network element, the information indicating that the first terminal device is abnormal; or when the second analytics network element determines that the first terminal device is abnormal, the second analytics network element directly feeds back, to the consumer network element, the information indicating that the terminal device is abnormal.

According to the exception detection method provided in this embodiment of this application, at least one of the first analytics network element and the second analytics network element may determine, according to exception detection policies at different levels and a data transmission status of a terminal device, whether the terminal device is abnormal. When the terminal device is abnormal, at least one of the first analytics network element and the second analytics network element may feed back, to the third analytics network element, information indicating that the terminal device is abnormal, so that the third analytics network element further analyzes whether an exception at another level exists in the terminal device; or the second analytics network element analyzes whether an exception at another level exists in the terminal device. Therefore, when an analytics network element (for example, the third analytics network element or the second analytics network element) needs to perform "comprehensive detection" on whether a terminal device in a network is abnormal, a range of terminal devices detected by the analytics network element can be reduced, thereby reducing a load of the analytics network element.

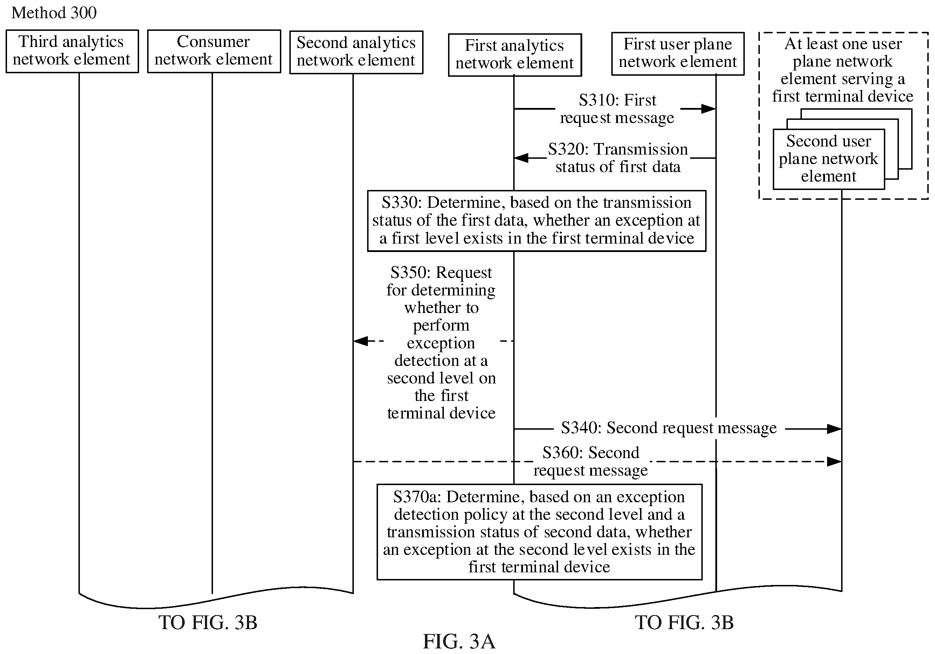

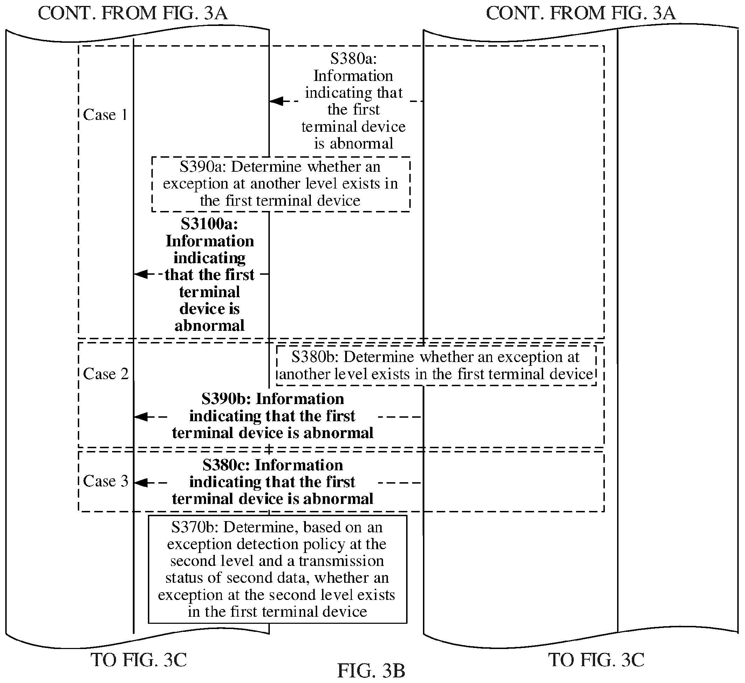

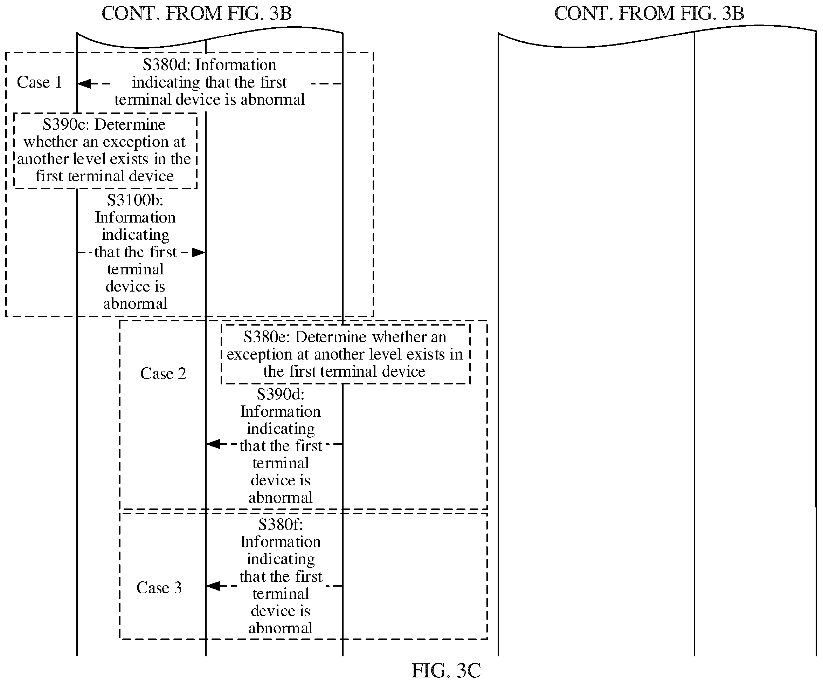

FIG. 3A, FIG. 3B, and FIG. 3C are a diagram of an exception detection method 300 according to an embodiment of this application. An analytics network element in the method 300 may be a network data analytics function network element, and the method 300 may include the following steps.

S310: A first analytics network element sends a first request message to a first user plane network element, where the first request message is used to request to report a transmission status of first data of a first terminal device.

Correspondingly, the first user plane network element receives the first request message from the first analytics network element.

The first data may include a data packet of at least one session of the first terminal device in the first user plane network element. For the transmission status of the first data of the first terminal device, refer to the descriptions of S210.

It may be understood that the first data of the first terminal device is transmitted through the first user plane network element. The transmission status of the first data of the first terminal device may be used to determine whether an exception at a first level exists in the first terminal device. The exception at the first level may be understood as an exception determined based on the transmission status of the first data.

The first analytics network element may be a network data analytics function network element, and is denoted as a second network data analytics function network element for ease of description. In other words, the second network data analytics function network element sends the first request message to the first user plane network element, to request to report the transmission status of the first data of the first terminal device.

It may be understood that, when the second network data analytics function network element cannot directly communicate with the first user plane network element, the second network data analytics function network element may send the first request message to the first user plane network element through a session management network element.

For information carried in the first request message, refer to the descriptions of S210. Details are not described again.

In a possible implementation, before the second network data analytics function network element sends the first request message to the first user plane network element, the second network data analytics function network element receives a fourth request message from a second analytics network element or a consumer network element. The second network data analytics function network element sends the first request message to the first user plane network element based on the fourth request message.

The second analytics network element may be a network data analytics function network element, and is denoted as a third network data analytics function network element for ease of differentiation. The consumer network element may be an application function network element or a policy management function network element.

The fourth request message may be used to request to detect whether at least one terminal device is abnormal, and the at least one terminal device includes the first terminal device.

The fourth request message may carry an identifier of the at least one terminal device, and the at least one terminal device includes the first terminal device. Alternatively, the fourth request message may carry indication information, the indication information indicates to detect whether at least one terminal device that can be analyzed by the second network data analytics function network element is abnormal, and the at least one terminal device that can be analyzed by the second network data analytics function network element includes the first terminal device.

The fourth request message may further carry indication information indicating an exception level of exception detection to be performed on the at least one terminal device. For example, the exception level may include the first level and a second level. When the indication information indicates that the level of the detection to be performed on the at least one terminal device is a high level, for example, the second level, the first session management network element may first start exception detection at a low level, for example, the first level, by default.

S320: The first user plane network element sends the transmission status of the first data to the first analytics network element.

Correspondingly, the first analytics network element receives the transmission status of the first data from the first user plane network element.

For example, the first user plane network element may send the transmission status of the first data to the first analytics network element through the session management network element.

S330: The first analytics network element determines, based on the transmission status of the first data, whether the exception at the first level exists in the first terminal device.

Specifically, the first analytics network element may determine, based on an exception detection policy at the first level and the transmission status of the first data, whether the exception at the first level exists in the first terminal device. For determining, by the first analytics network element based on the transmission status of the first data, whether the exception at the first level exists in the first terminal device, refer to the descriptions of S230.

S340: The first analytics network element sends a second request message to at least one user plane network element serving the first terminal device, where the second request message is used to request to report a transmission status of second data of the first terminal device.

Correspondingly, any user plane network element (for example, a second user plane network element) in the at least one user plane network element is used as an example. The second user plane network element receives the second request message from the first analytics network element.

For information carried in the second request message and the transmission status of the second data, refer to the descriptions of S240.

In other words, data of the first terminal device is transmitted through the at least one user plane network element. When whether the exception at the first level exists in the first terminal device needs to be determined, the first analytics network element may send the first request message to a user plane network element (for example, the first user plane network element) serving the first terminal device, to request the transmission status of the first data of the first terminal device. When determining, based on the transmission status of the first data and the exception detection policy at the first level, that the exception at the first level exists in the first terminal device, the first analytics network element may send the second request message to the at least one user plane network element serving the first terminal device, to request the transmission status of the second data of the first terminal device, where the transmission status of the second data may be used to analyze whether an exception at the second level exists in the first terminal device.

In a possible case, the at least one user plane network element may include the first user plane network element.

In this case, optionally, the first analytics network element may send a request message to the first user plane network element, where the request message is used to request the transmission status of the first data and the transmission status of the second data of the first terminal device.

In another possible case, the at least one user plane network element may alternatively not include the first user plane network element.

In other words, the first analytics network element requests the transmission status of the first data of the first terminal device through the first user plane network element; and when the first user plane network element determines, based on the transmission status of the first data, that the first terminal device is abnormal, the first analytics network element may request the transmission status of the second data of the first terminal device from a user plane network element that is other than the first user plane network element and that serves the first terminal device.

Optionally, in S350, before the first analytics network element sends the second request message to the second user plane network element, the first analytics network element may send, to a first network element, a request for whether to perform exception detection at the second level on the first terminal device.

The request may carry information indicating that the exception at the first level exists in the first terminal device.

When the first network element determines to perform the exception detection at the second level on the first terminal device, the first analytics network element receives, from the first network element, indication information indicating to perform the exception detection at the second level on the first terminal device; and the first analytics network element sends the second request message to the second user plane network element based on the indication information.

The first network element may be at least one of the second analytics network element and the consumer network element.

Optionally, in S360, when the second analytics network element determines to perform the exception detection at the second level on the first terminal device, the second analytics function network element may further send the second request message to the second user plane network element. It may be understood that, in this case, S340 may not be performed.

For example, the second analytics network element may send the second request message to the second user plane network element through the first analytics network element. Alternatively, when the second analytics network element does not directly communicate with the second user plane network element, the second analytics network element may alternatively send the second request message to the second user plane network element through the first analytics network element and the session management network element.

S370a: The first analytics network element determines, based on an exception detection policy at the second level and the transmission status of the second data, whether the exception at the second level exists in the first terminal device.

For example, if the first analytics network element sends the second request message to the second user plane network element, the first analytics network element may receive the transmission status of the second data from the second user plane function network element, the first analytics network element determines, based on the exception detection policy at the second level and the transmission status of the second data, whether the exception at the second level exists in the first terminal device.

For a specific manner in which the first analytics network element determines, based on the exception detection policy at the second level and the transmission status of the second data, whether the exception at the second level exists in the first terminal device, refer to the descriptions of S270a.

Alternatively, in S370b, the second analytics network element determines, based on an exception detection policy at the second level and the transmission status of the second data, whether the exception at the second level exists in the first terminal device.

For example, if the second analytics network element sends the second request message to the second user plane network element, the second analytics network element determines, based on the exception detection policy at the second level and the received transmission status of the second data, whether the exception at the second level exists in the first terminal device. Alternatively, the first analytics network element may send the transmission status of the second data of the first terminal device to the second analytics network element, and the second analytics network element determines, based on the exception detection policy at the second level and the transmission status of the second data, whether the exception at the second level exists in the first terminal device.

For a specific process in which the second analytics network element determines, based on the exception detection policy at the second level and the transmission status of the second data, whether the exception at the second level exists in the first terminal device, refer to S270a. Details are not described again.

If the first analytics network element determines whether the exception at the second level exists in the first terminal device (S370a), subsequent steps may include three cases.

### Case 1

S380a: The first analytics network element sends, to the second analytics network element, information indicating that the first terminal device is abnormal.

For the information indicating that the first terminal device is abnormal, refer to the descriptions of S280a.

S390a: The second analytics network element determines whether an exception at another level exists in the first terminal device.

This step is similar to S290a. Details are not described again.

S3100a: The second analytics network element sends, to the consumer network element, the information indicating that the first terminal device is abnormal.

For the information indicating that the first terminal device is abnormal, refer to the descriptions of S2100a.

It should be noted that S380a to S3100a are optional steps.

### Case 2

S380b: The first analytics network element determines whether an exception at another level exists in the first terminal device.

For determining, by the first analytics network element, whether the exception at the another level exists in the first terminal device, refer to the descriptions of determining, by the second analytics network element, whether the exception at the another level exists in the first terminal device in S290a.

S390b: The first analytics network element sends, to the consumer network element, information indicating that the first terminal device is abnormal.

This step is similar to S2100a. Details are not described again.

It should be noted that S380b to S390b are optional steps.

### Case 3

Optionally, in S380c, the first analytics network element may directly send, to the consumer network element, information indicating that the first terminal device is abnormal.

In other words, when the first analytics network element determines that the first terminal device is abnormal, the first analytics network element may feed back, to a second analytics network element, the information indicating that the first terminal device is abnormal, the second analytics network element further analyzes whether an exception at another level exists in the first terminal device, the second analytics network element feeds back, to the consumer network element, the information indicating that the first terminal device is abnormal; when the first analytics network element determines that the first terminal device is abnormal, the first analytics network element further analyzes whether an exception at another level exists in the first terminal device, and the first analytics network element feeds back, to the consumer network element, the information indicating that the first terminal device is abnormal; or the first analytics network element may directly feed back, to the consumer network element, the information indicating that the terminal device is abnormal.

If the second analytics network element determines whether the exception at the second level exists in the first terminal device (S370b), subsequent steps may also include three cases.

### Case 1

S380d: The second analytics network element sends, to a third analytics network element, information indicating that the first terminal device is abnormal.

The third analytics network element may be a network data analytics function network element. **In** this case, the second analytics network element is managed by the third analytics network element, in other words, a service range of the third analytics network element is greater than a service range of the second analytics network element.

For the information indicating that the first terminal device is abnormal, refer to the descriptions of S280a.

S390c: The third analytics network element analyzes whether an exception at another level exists in the first terminal device.

This step is similar to S290a. Details are not described again.

S3100b: The third analytics network element sends, to the consumer network element, the information indicating that the first terminal device is abnormal.

This step is similar to S2100a. Details are not described again.

It should be noted that S380d, S390c, and S3100b are optional steps.

### Case 2

S380e: The second analytics network element determines whether an exception at another level exists in the first terminal device.

For determining, by the second analytics network element, whether the exception at the another level exists in the first terminal device, refer to the descriptions of determining, by the second analytics network element, whether the exception at the another level exists in the first terminal device in S290a.

S390d: The second analytics network element sends, to the consumer network element, information indicating that the first terminal device is abnormal.

This step is similar to S2100a. Details are not described again.

It should be noted that S380e and S390d are optional steps.

### Case 3

Optionally, in S380f, the second analytics network element directly sends, to the consumer network element, information indicating that the first terminal device is abnormal.

According to the exception detection method provided in this embodiment of this application, at least one of the first analytics network element and the second analytics network element may determine, according to exception detection policies at different levels and a data transmission status of a terminal device, whether the terminal device is abnormal. When the terminal device is abnormal, at least one of the first analytics network element and the second analytics network element may feed back, to the third analytics network element, information indicating that the terminal device is abnormal, so that the third analytics network element further analyzes whether an exception at another level exists in the terminal device; or the second analytics network element analyzes whether an exception at another level exists in the terminal device. Therefore, when an analytics network element (for example, the third analytics network element or the second analytics network element) needs to perform "comprehensive detection" on whether a terminal device in a network is abnormal, a range of terminal devices detected by the analytics network element can be reduced, thereby reducing a load of the analytics network element.

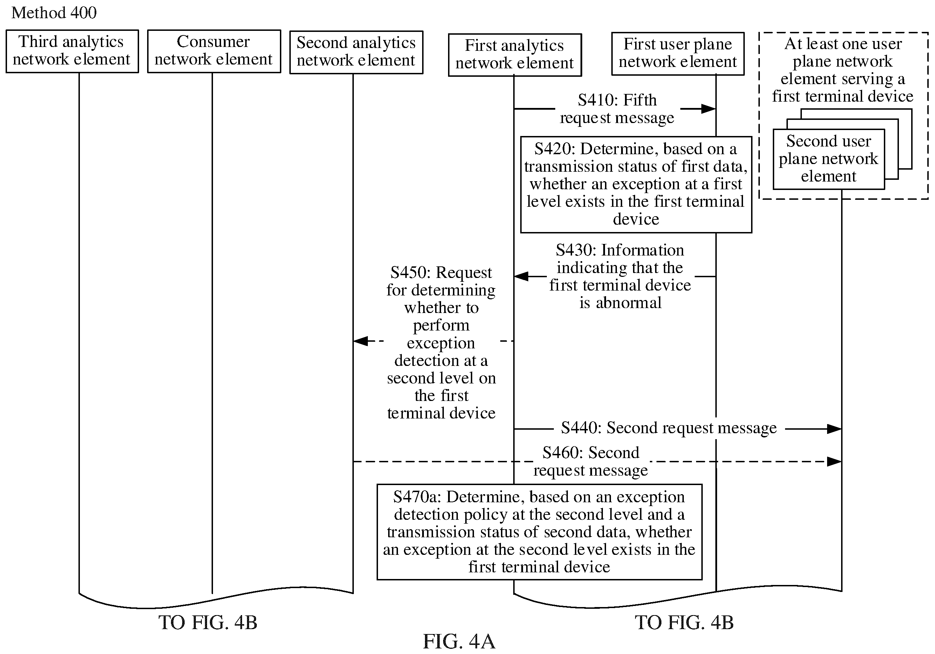

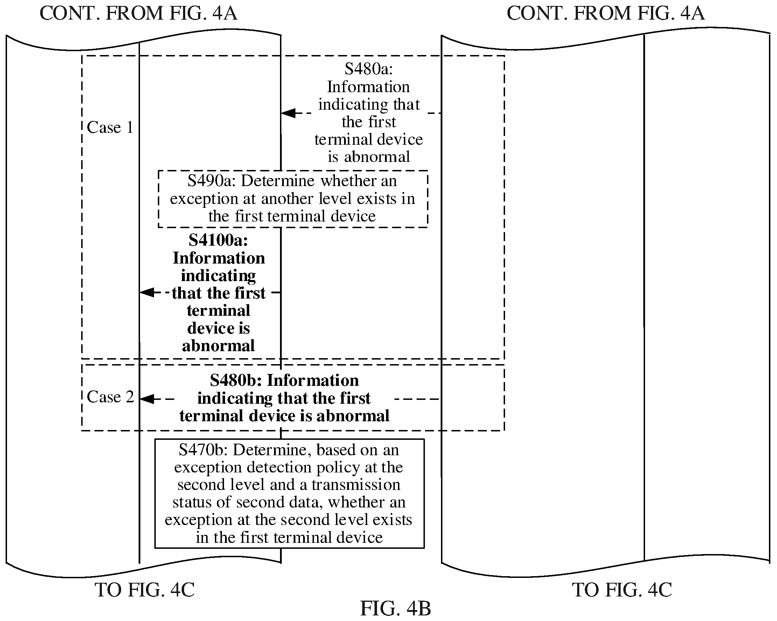

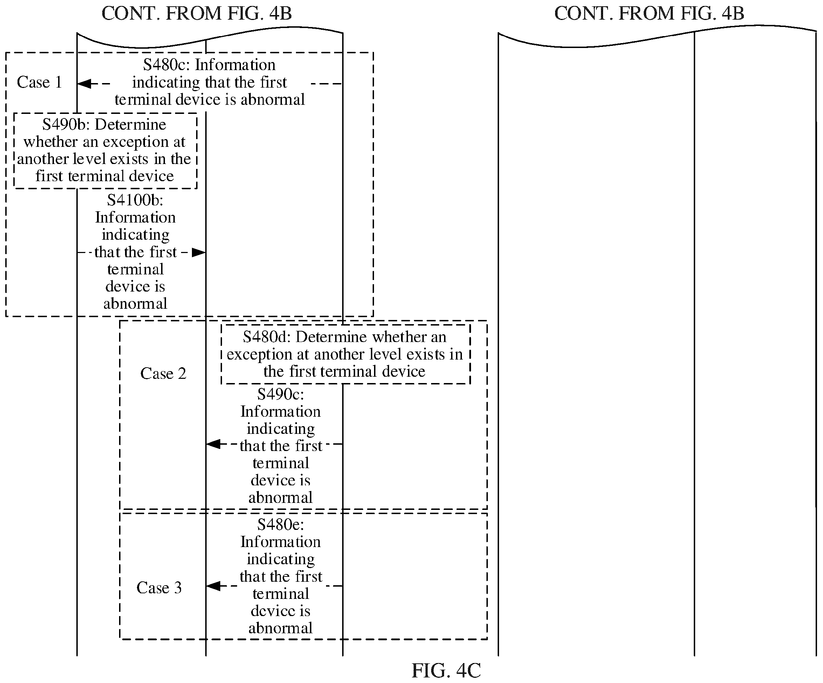

FIG. 4A, FIG. 4B, and FIG. 4C are a diagram of an exception detection method 400 according to an embodiment of this application. In the method 400, a first user plane network element may determine whether an exception at a first level exists in a terminal device. The method 400 may include the following steps.

S410: A first analytics network element sends a fifth request message to the first user plane network element, where the fifth request message is used to request to determine a transmission status of first data of a first terminal device.

Correspondingly, the first user plane network element receives the fifth request message from the first analytics network element.

For the transmission status of the first data of the first terminal device, refer to the descriptions of S210. Details are not described again.

It may be understood that the transmission status of the first data of the first terminal device may be used to determine whether an exception at the first level exists in the first terminal device. In other words, when the first user plane network element determines the transmission status of the first data, the first user plane may determine whether the exception at the first level exists in the first terminal device. The exception at the first level may be understood as an exception determined based on the transmission status of the first data.

The first analytics network element is a session management network element, and is denoted as a first session management network element for ease of differentiation. In other words, the first session management network element sends the fifth request message to the first user plane network element, to request to determine the transmission status of the first data of the first terminal device.

The fifth request message may carry information indicating a PDR at the first level, and the PDR at the first level is used by the first user plane network element to match the first data of the first terminal device, in other words, the PDR at the first level is used by the first user plane network element to detect the first data. The PDR at the first level may be preconfigured in the first user plane network element, or may be sent by the first session management network element to the first user plane network element by using the first request message.

The fifth request message may further carry indication information indicating the first user plane network element to determine, according to an exception detection policy at the first level and the transmission status of the first data, whether the exception at the first level exists in the first terminal device. Correspondingly, the fifth request message may include the exception detection policy at the first level.

Optionally, before the first session management network element sends the fifth request message to the first user plane network element, the first session management network element receives a third request message from a second analytics network element, where the third request message is used to request to detect whether at least one terminal device is abnormal, and the at least one terminal device includes the first terminal device. The first session management network element sends the fifth request message to the first user plane network element based on the third request message. For the third request message, refer to S210. Details are not described again.

The second analytics network element may be a network data analytics function network element, and is denoted as a first network data analytics function network element for ease of differentiation. For the first network data analytics function network element, refer to the descriptions of S210.

S420: The first user plane network element determines, based on the transmission status of the first data, whether the exception at the first level exists in the first terminal device.

Specifically, the first user plane network element may determine, based on the exception detection policy at the first level and the transmission status of the first data, whether the exception at the first level exists in the first terminal device. The exception detection policy at the first level includes a correspondence between the transmission status of the first data and a first threshold for determining whether the exception at the first level exists.

The correspondence between the transmission status of the first data and the first threshold may be that the transmission status of the first data is greater than, equal to, or less than the first threshold.

For example, the transmission status of the first data includes a quantity of first data packets, and the quantity of first data packets may represent a quantity of calls initiated by the first terminal device to another terminal device. The first threshold may be a preset upper limit of the quantity of calls initiated by the terminal device. The correspondence between the transmission status of the first data and the first threshold may be that the quantity of first data packets is greater than or equal to the first threshold. When the quantity of calls initiated by the first terminal device to the another terminal device is greater than or equal to the first threshold, it may be determined that the exception at the first level may exist in the first terminal device.

In the foregoing example, for related descriptions of the first data, refer to the descriptions of S210.

S430: The first user plane network element sends, to the first analytics network element, information indicating that the exception at the first level exists in the first terminal device.

Correspondingly, the first analytics network element receives, from the first user plane network element, the information indicating that the exception at the first level exists in the first terminal device.

The information indicating that the exception at the first level exists in the first terminal device may include the transmission status of the first data of the first terminal device.

S440: The first analytics network element sends a second request message to at least one user plane network element serving the first terminal device, where the second request message is used to request to report a transmission status of second data of the first terminal device.

Correspondingly, any user plane network element (for example, a second user plane network element) in the at least one user plane network element is used as an example. The second user plane network element receives the second request message from the first analytics network element.

A specific process of this step is similar to that in S240. Details are not described again.

Optionally, in S450, before the first analytics network element sends the second request message to the second user plane network element, the first analytics network element may send, to a first network element, a request for determining whether to perform exception detection at the second level on the first terminal device.

When the first network element determines to perform the exception detection at the second level on the first terminal device, the first analytics network element receives, from the first network element, indication information indicating to perform the exception detection at the second level on the first terminal device; and the first analytics network element sends the second request message to the second user plane network element based on the indication information. For details of this step, refer to the descriptions of S250.

The first network element includes at least one of the second analytics network element and a policy analytics network element.

Optionally, in S460, when the second analytics network element determines to perform the exception detection at the second level on the first terminal device, the second analytics network element may further send the second request message to the second user plane network element. It may be understood that, in this case, S440 may not be performed.

For details of this step, refer to the descriptions of S260.

S470a: The first analytics network element determines, based on an exception detection policy at the second level and the transmission status of the second data, whether an exception at the second level exists in the first terminal device.

For this step, refer to the descriptions of S270a. Details are not described again.

Alternatively, in S470b, the second analytics network element determines, based on an exception detection policy at the second level and the transmission status of the second data, whether an exception at the second level exists in the first terminal device.

For this step, refer to the descriptions of S270b. Details are not described again.

If the first analytics network element determines whether the exception at the second level exists in the first terminal device (S470a), subsequent steps may include two cases.

### Case 1

S480a: The first analytics network element sends, to the second analytics network element, information indicating that the first terminal device is abnormal.

S490a: The second analytics network element analyzes whether an exception at another level exists in the first terminal device.

S4100a: The second analytics network element sends, to a consumer network element, the information indicating that the first terminal device is abnormal.

S480a to S4100a are similar to S280a to S2100a. Details are not described again. S480a to S4100a are optional steps.

### Case 2

Optionally, in S480b, the first analytics network element sends, to a consumer network element, information indicating that the first terminal device is abnormal.

This step is similar to S280b. Details are not described again.

If the second analytics network element determines whether the exception at the second level exists in the first terminal device (S470b), subsequent steps may include three cases.

### Case 1

S480c: The second analytics network element sends, to a third analytics network element, information indicating that the first terminal device is abnormal.

S490b: The third analytics network element analyzes whether an exception at another level exists in the first terminal device.

S4100b: The third analytics network element sends, to a consumer network element, the information indicating that the first terminal device is abnormal.

It should be noted that S480c, S490b, and S4100b are optional steps. S480c, S490b, and S4100b are respectively similar to S280c, S290b, and S2100b. Details are not described again.

### Case 2

S480d: The second analytics network element determines whether an exception at another level exists in the first terminal device.

S490c: The second analytics network element sends, to a consumer network element, information indicating that the first terminal device is abnormal.

It should be noted that S480d and S490c are optional steps. S480d and S490c are respectively similar to S280c and S290c. Details are not described again.

### Case 3

Optionally, in S480e, the second analytics network element sends, to a consumer network element, information indicating that the first terminal device is abnormal.

This step is similar to S280e. Details are not described again.

According to the exception detection method provided in this embodiment of this application, the first user plane network element may determine, according to the exception detection policy at the first level and a data transmission status of a terminal device, whether an exception at the first level exists in the terminal device. When the exception at the first level exists in the terminal device, the first user plane network element may feed back, to an analytics network element (for example, the first analytics network element or the second analytics network element), information indicating that the terminal device is abnormal, so that at least one of the analytics network elements can determine, based on exception detection at different levels and the transmission status of the terminal device, whether the terminal device is abnormal. At least one of the first analytics network element and the second analytics network element may feed back, to the third analytics network element, the information indicating that the terminal device is abnormal, so that the third analytics network element further analyzes whether an exception at another level exists in the terminal device; or the second analytics network element analyzes whether an exception at another level exists. Therefore, when an analytics network element (at least one of the first analytics network element, the second analytics network element, and the third analytics network element) needs to perform "comprehensive detection" on whether a terminal device in a network is abnormal, a range of detected terminal devices can be reduced, thereby reducing a load of the analytics network element or the second analytics network element.

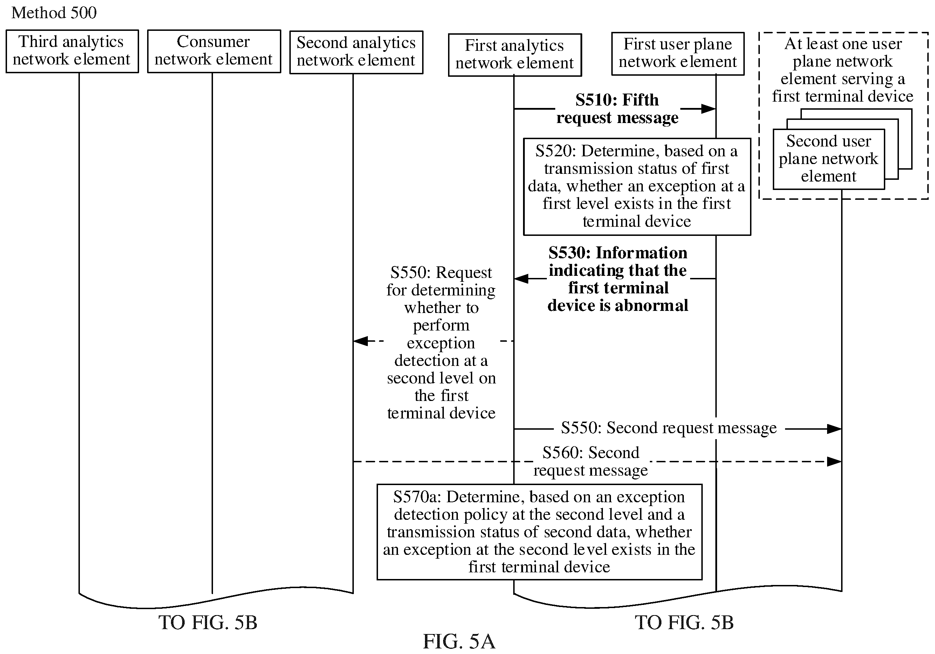

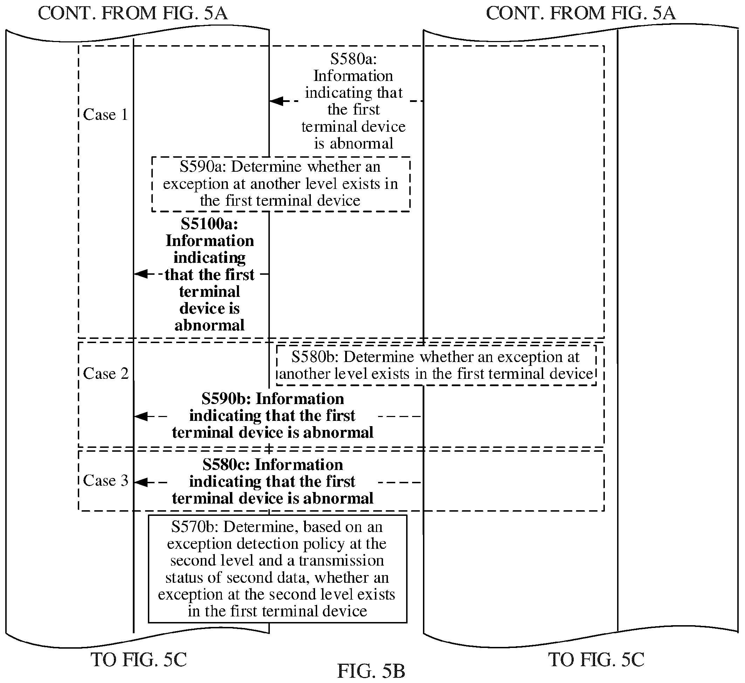

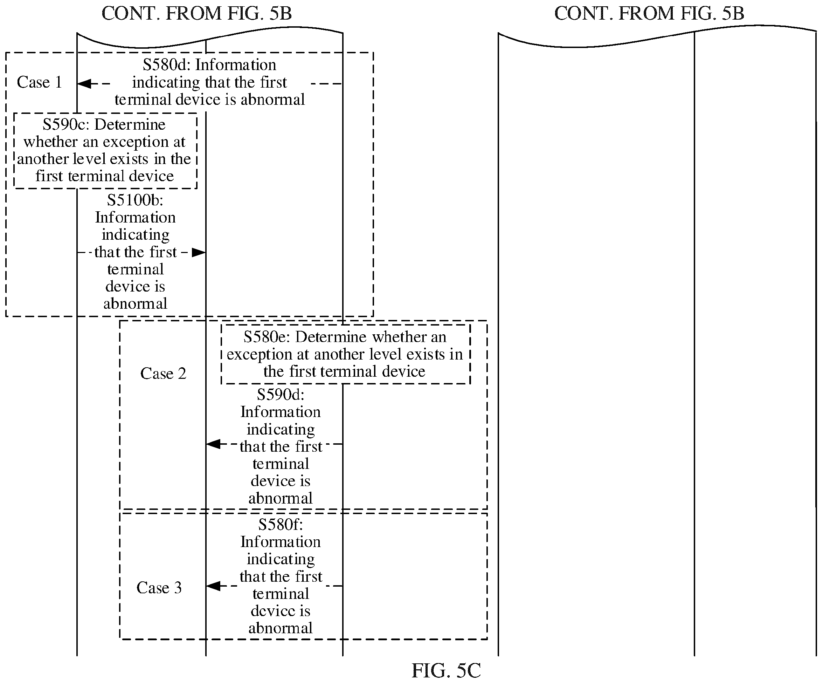

FIG. 5A, FIG. 5B, and FIG. 5C are a diagram of an exception detection method 500 according to an embodiment of this application. Similar to the method 400, in the method 500, a first user plane network element determines whether an exception at a first level exists in a terminal device. An analytics network element in the method 500 may be a network data analytics function network element, and the method 500 may include the following steps.

S510: A first analytics network element sends a fifth request message to the first user plane network element, where the fifth request message is used to request to determine a transmission status of first data of a first terminal device.

Correspondingly, the first user plane network element receives the fifth request message from the first analytics network element.

For the transmission status of the first data of the first terminal device, refer to the descriptions of S210. Details are not described again.

It may be understood that the transmission status of the first data of the first terminal device may be used to determine whether an exception at the first level exists in the first terminal device. In other words, when the first user plane network element determines the transmission status of the first data, the first user plane may determine whether the exception at the first level exists in the first terminal device. The exception at the first level may be understood as an exception determined based on the transmission status of the first data.

The first analytics network element is a network data analytics function network element, and is denoted as a second network data analytics function network element for ease of differentiation. In other words, the second network data analytics function network element sends the fifth request message to the first user plane network element, to request to determine the transmission status of the first data of the first terminal device.

It may be understood that when the second network data analytics function network element cannot directly communicate with the first user plane network element, the second network data analytics function network element may forward the fifth request message through a session management network element.

Optionally, before the second network data analytics function network element sends the fifth request message to the first user plane network element, the second network data analytics function network element may receive a fourth request message from a consumer network element, where the fourth request message is used to request to detect whether at least one terminal device is abnormal, and the at least one terminal device includes the first terminal device. The consumer network element may be an application function network element or a policy management function network element.

Optionally, the fourth request message may carry indication information, the indication information indicates an exception level of exception detection to be performed on the at least one terminal device, and the exception level may include the first level and a second level. When the indication information indicates that the level of the detection to be performed on the at least one terminal device is the second level, the second network data analytics function network element may first start exception detection at a low level, for example, the first level, by default. The second network data analytics function network element may send the fifth request message to the first user plane network element based on the fourth request message.

S520: The first user plane network element determines, based on the transmission status of the first data, whether the exception at the first level exists in the first terminal device.

This step is similar to S420. Details are not described again.

S530: The first user plane network element sends, to the first analytics network element, information indicating that the exception at the first level exists in the first terminal device.

Correspondingly, the first analytics network element receives, from the first user plane network element, the information indicating that the exception at the first level exists in the first terminal device.

This step is similar to S430.

S540: The first analytics network element sends a second request message to at least one user plane network element serving the first terminal device, where the second request message is used to request to report a transmission status of second data of the first terminal device.

Correspondingly, any user plane network element (for example, a second user plane network element) in the at least one user plane network element is used as an example. The second user plane network element receives the second request message from the first analytics network element.

A specific process of this step is similar to that in S440. Details are not described again.

Optionally, in S550, before the first analytics network element sends the second request message to the second user plane network element, the first analytics network element may further send, to a first network element, a request for whether to perform exception detection at the second level on the first terminal device.

When the first network element determines to perform the exception detection at the second level on the first terminal device, the first analytics network element receives, from the first network element, indication information indicating to perform the exception detection at the second level on the first terminal device; and the first analytics network element sends the second request message to the second user plane network element based on the indication information.

The first network element includes at least one of a second analytics network element and a policy analytics network element, and the second analytics network element may be a third network data analytics function network element. For details of this step, refer to the descriptions of S350.

Optionally, in S560, when the second analytics function network element determines to perform the exception detection at the second level on the first terminal device, the second analytics function network element may further send the second request message to the second user plane network element.

For details, refer to the descriptions of S360.

S570a: The first analytics network element determines, based on an exception detection policy at the second level and the transmission status of the second data, whether an exception at the second level exists in the first terminal device.

For this step, refer to the descriptions of S370a. Details are not described again.

Alternatively, in S570b, the second analytics network element determines, based on an exception detection policy at the second level and the transmission status of the second data, whether an exception at the second level exists in the first terminal device.

For this step, refer to the descriptions of S370b. Details are not described again.

If the first analytics network element determines whether the exception at the second level exists in the first terminal device (S570a), subsequent steps may include three cases.

### Case 1

S580a: The first analytics network element sends, to the second analytics network element, information indicating that the first terminal device is abnormal.

S590a: The second analytics network element determines whether an exception at another level exists in the first terminal device.

S5100a: The second analytics network element sends, to the consumer network element, the information indicating that the first terminal device is abnormal.

S580a to S5100a are similar to S380a to S3100a. Details are not described again. S580a to S5100a are optional steps.

### Case 2

S580b: The first analytics network element determines whether an exception at another level exists in the first terminal device.

S590b: The first analytics network element sends, to the consumer network element, information indicating that the first terminal device is abnormal.

S580b to S590b are similar to S380b to S390b. Details are not described again. S580b to S590b are optional steps.

### Case 3

Optionally, in S580c, the first analytics network element may directly send, to the consumer network element, information indicating that the first terminal device is abnormal.

If the second analytics network element determines whether the exception at the second level exists in the first terminal device (S570b), subsequent steps may also include three cases.

### Case 1

S580d: The second analytics network element sends, to a third analytics network element, information indicating that the first terminal device is abnormal.

S590c: The third analytics network element analyzes whether an exception at another level exists in the first terminal device.

S5100b: The third analytics network element sends, to the consumer network element, the information indicating that the first terminal device is abnormal.

It should be noted that S580d, S590c, and S5100b are optional steps. S580d, S590c, and S5100b are respectively similar to S380d, S390c, and S3100b. Details are not described again.

### Case 2

S580e: The second analytics network element determines whether an exception at another level exists in the first terminal device.

S590d: The second analytics network element sends, to the consumer network element, information indicating that the first terminal device is abnormal.

It should be noted that S580e and S590d are optional steps. S580e and S590d are respectively similar to S380e and S390d. Details are not described again.

### Case 3

Optionally, in S580f, the second analytics network element directly sends, to the consumer network element, information indicating that the first terminal device is abnormal.

According to the exception detection method provided in this embodiment of this application, the first user plane network element may determine, according to the exception detection policy at the first level and a transmission status of a terminal device, whether an exception at the first level exists in the terminal device. When the exception at the first level exists in the terminal device, the first user plane network element may feed back, to an analytics network element (for example, the first analytics network element or the second analytics network element), information indicating that the terminal device is abnormal, so that at least one of the analytics network elements can determine, based on exception detection at different levels and the transmission status of the terminal device, whether the terminal device is abnormal. At least one of the first analytics network element and the second analytics network element may feed back, to the third analytics network element, the information indicating that the terminal device is abnormal, so that the third analytics network element further analyzes whether an exception at another level exists in the terminal device; or the second analytics network element analyzes whether an exception at another level exists. Therefore, when an analytics network element (at least one of the first analytics network element, the second analytics network element, and the third analytics network element) needs to perform "comprehensive detection" on whether a terminal device in a network is abnormal, a range of detected terminal devices can be reduced, thereby reducing a load of the analytics network element or the second analytics network element.

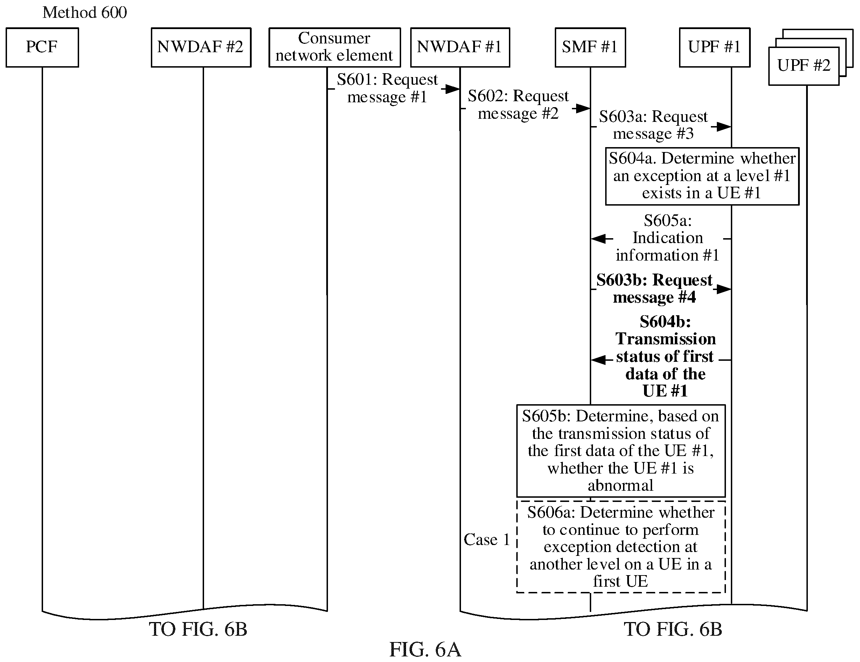

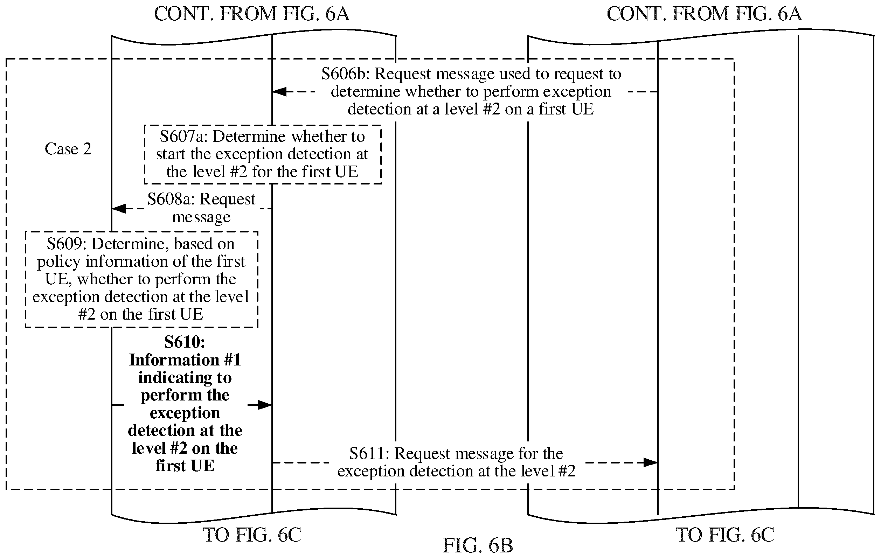

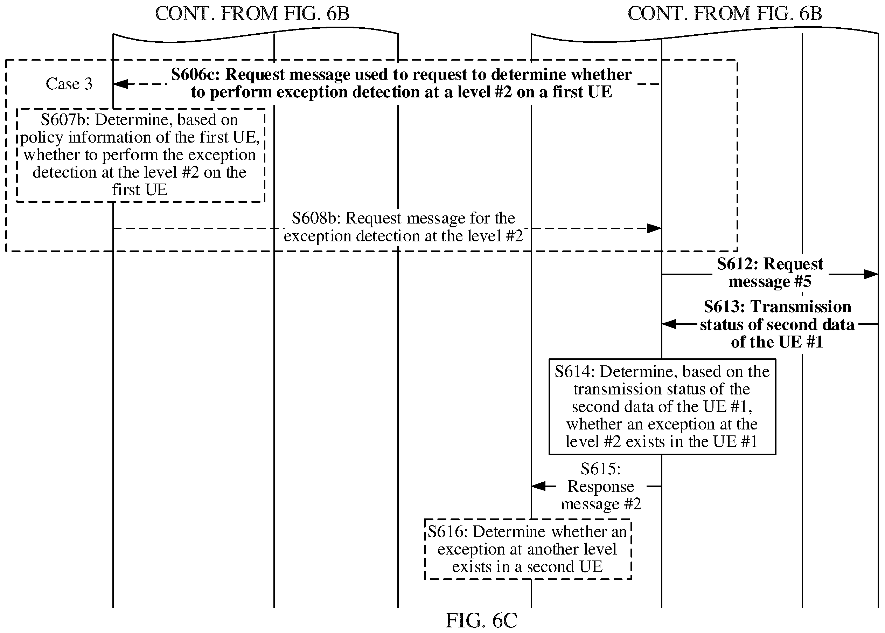

FIG. 6A, FIG. 6B, and FIG. 6C are a diagram of an exception detection method 600 according to an embodiment of this application. The method 600 may include the following steps.

S601: An NWDAF #1 receives a request message #1 from a consumer network element, where the request message #1 is used to request the NWDAF #1 to analyze whether a UE in a UE list #1 is abnormal.

The NWDAF #1 may be an example of the second analytics network element in S210. The consumer network element may be a function network element, for example, a PCF network element, in a network. Alternatively, the consumer network element may be an application function AF network element.

It should be noted that the AF may belong to an operator network or a third party. When the AF belongs to the third party, the NWDAF #1 may receive the request message #1 from the AF through an NEF.

In an example, the request message #1 may include the UE list #1, and the UE list #1 includes an identifier of at least one UE. A UE that can be analyzed by the NWDAF #1 includes the at least one UE.

In another example, the request message #1 may carry indication information #1, and the indication information #1 indicates the NWDAF #1 to analyze all UEs that can be analyzed by the NWDAF #1. In other words, the UE list #1 includes all the UEs that can be analyzed by the NWDAF #1.

In other words, the UE list #1 may be determined by the consumer network element, and sent by the consumer network element to the NWDAF #1 by using the request message #1. Alternatively, the UE list #1 may be determined by the NWDAF #1 based on the indication information #1 sent by the consumer network element, and the UE list #1 includes all the UEs that can be analyzed by the NWDAF #1.

It should be noted that the consumer network element may request, through subscription (subscription) or notification (notification), the NWDAF #1 to analyze whether the UE in the UE list #1 is abnormal. In other words, the request message #1 sent by the consumer network element may be a subscription request message; and after receiving the subscription request message, the NWDAF #1 may periodically update and send a list of abnormal UEs to the consumer network element. Alternatively, the request message #1 may be a notification (notification) request message; and after receiving the request message, the NWDAF #1 may notify (send) a list of abnormal UEs to the consumer network element.

S602: The NWDAF #1 sends a request message #2 to an SMF #1, where the request message #2 is used to request the SMF #1 to analyze whether a UE in a UE list #2 is abnormal.

Correspondingly, the SMF #1 receives the request message #2 from the NWDAF #1.

The SMF #1 may be an example of the first session management network element in S210, and the request message #2 may be an example of the third request message in S210.

The UE list #2 includes at least one UE, and the UE list #2 belongs to the UE list #1. In other words, the UE in the UE list #2 is a part or all of the UEs in the UE list #1. The SMF #1 is a session management network element to which the UE in the UE list #2 belongs.

It may be understood that the NWDAF #1 may send the request message #2 to a session management network element to which the UE in the UE list #1 belongs. The session management network element to which the UE in the UE list #1 belongs includes at least one session management network element, and the at least one session management network element includes the SMF #1. In other words, the SMF #1 is a session management network element to which the at least one UE in the UE list #1 belongs.

In a possible implementation, after receiving the request message #1 from the consumer network element, the NWDAF #1 sends, by default, the request message #2 to the session management network element to which the UE in the UE list #1 belongs, to reduce the UEs in the UE list #1.

In another possible implementation, the NWDAF #1 may determine, through a determining procedure, to send the request message #2 to the session management network element to which the UE in the UE list #1 belongs, to reduce the UEs in the UE list #1.

For example, the NWDAF #1 receives the request message #1. If the request message #1 carries the indication information #1, the NWDAF #1 sends the request message #2 to the session management network element to which the UE in the UE list #1 belongs. Specifically, if the NWDAF #1 learns, based on the indication information #1, that the NWDAF #1 needs to analyze all UEs supported by the session management network element, the NWDAF sends the request message #2 to the session management network element to which the UE in the UE list #1 belongs, where the session management network element to which the UE in the UE list #1 belongs includes the SMF #1.

For another example, the NWDAF #1 may determine, based on a quantity of UEs in the UE list #1, whether to send the request message #2 to the session management network element to which the UE in the UE list #1 belongs. Specifically, if the quantity of UEs in the UE list #1 is greater than a threshold #1, the NWDAF #1 sends the request message #2 to the session management network element to which the UE in the UE list #1 belongs, where the session management network element to which the UE in the UE list #1 belongs includes the SMF #1. The threshold #1 may be a preset upper limit of a quantity of UEs that can be analyzed by the NWDAF #1.

It should be noted that, that the NWDAF #1 reduces the UEs in the UE list #1 may be understood as that the NWDAF #1 requests another network element to analyze whether the UE in the UE list #1 is abnormal, to reduce a range of UEs analyzed by the NWDAF #1, in other words, a list of abnormal UEs, in the UE list #1, obtained by the another network element through the analytics is a reduced list of UEs. The another network element may include the session management network element to which the UE in the UE list #1 belongs. The range of terminal devices analyzed by the NWDAF #1 is reduced, so that a load of the NWDAF #1 network element can be reduced.

The request message #2 may include an identifier of the UE in the UE list #2. Alternatively, the request message #2 may carry indication information #2, and the indication information #2 indicates the SMF #1 to determine whether all UEs that can be analyzed by the SMF #1 are abnormal, in other words, the UE list #2 includes all the UEs that can be analyzed by the SMF #1.

Optionally, the request message #2 may further carry indication information #3, and the indication information #3 may indicate an exception level of exception detection to be performed by the SMF #1 on the UE in the UE list #2.

At least one policy group (or referred to as an "exception detection policy group") may be preconfigured in an analytics network element (for example, an NWDAF, an SMF, or a UPF), and each of the at least one policy group corresponds to one policy group level (or may be referred to as an exception level). Each policy group may include at least one exception detection policy, and the at least one exception detection policy is used to detect whether a UE is abnormal.

Each exception detection policy may include an analytics entry (or may be referred to as an analytics parameter), a threshold corresponding to the analytics parameter, and an expected exception result. Optionally, a weight may be further configured for each exception detection policy. The weight is used by the analytics network element to associate with a plurality of exception detection policies in one policy group to determine whether an exception at this exception level exists in the UE.

For example, determining, according to an exception detection policy #1, whether the UE is abnormal may be understood as: determining whether a value relationship between a statistical value of an analytics entry #1 of the UE and a threshold #1 corresponding to the statistical value of the analytics entry #1 of the UE satisfies an expected exception result #1. If the expected exception result #1 is satisfied, it may be determined that the UE may be abnormal. The analytics entry #1, the threshold #1, and the exception threshold result #1 are an analytics parameter, a threshold, and an expected exception result that correspond to the exception detection policy #1.

A statistical value of the analytics entry (parameter) corresponding to the exception detection policy is related to a data transmission status of a terminal device.

For ease of description, if the value relationship between the statistical value of the analytics entry #1 of the UE and the threshold #1 corresponding to the analytics entry #1 satisfies the expected exception result #1, it may be considered that the UE triggers the exception detection policy #1. In other words, if a correspondence between a data transmission status #1 of the terminal device and the corresponding threshold #1 satisfies the expected exception result #1, it is considered that the UE triggers the exception detection policy. Descriptions of a same case are omitted below.

For example, different exception detection policies may be classified into different exception levels based on exception detection complexity. For example, complexity of an exception detection policy may be determined based on a size of a resource, a calculation amount, duration, and the like required for executing the exception detection policy.

Table 1 is an example of classifying different exception detection policies into different exception levels. As shown in Table 1, exception detection policies may be classified into three policy groups. The three policy groups respectively correspond to three policy group levels (for example, a level #1, a level #2, and a level #3). For an exception detection policy corresponding to each policy group, refer to Table 1. Different exception detection policies may be identified by using policy numbers (for example, policy numbers "1" to "9").

**Table 1**

| Policy group level | Policy number | Analytics entry | Threshold | Expected exception result | Weight |
|---|---|---|---|---|---|
| Level #1 | 1 | Quantity of calls initiated by a UE | T₁ | ≥T₁ | W₁ |
| | 2 | Quantity of calls that are initiated by the UE and that are rejected | T₂ | ≥T₂ | W₂ |
| Level #2 | 3 | Quantity of times that the UE is called | T₃ | ≤T₃ | W₃ |
| | 4 | Quantity of calls that are initiated by the UE and that are hung up | T₄ | ≤T₄ | W₄ |
| | 5 | Ratio of the quantity of calls that are initiated by the UE and that are rejected to the quantity of calls initiated by the UE | T₅ | ≥T₅ | W₅ |
| | 6 | Ratio of the quantity of calls that are initiated by the UE and that are hung up to the quantity of calls initiated by the UE | T₆ | ≥T₆ | W₆ |
| | 7 | Ratio of a quantity of times that the UE is served as a calling party to a quantity of times that the UE is served as a called party | T₇ | ≥T₇ | W₇ |
| | 8 | Average quantity of calls initiated by the UE to each called UE | T₈ | ≥T₈ | W₈ |
| Level #3 | 9 | Frequency at which a mobile equipment (mobile equipment, ME) of the UE is changed | T₉ | ≥T₉ | W₉ |
| | 10 | Span of an identifier of a changed ME of the UE | T₁₀ | ≥T₁₀ | W₁₀ |
| | 11 | Dispersion of a target area of the call of the UE | T₁₁ | ≤T₁₁ | W₁₁ |
| | 12 | Dispersion of call duration of the UE | T₁₂ | ≤T₁₂ | W₁₂ |
| | 13 | Dispersion of a time point at which the UE initiates a call | T₁₃ | ≥T₁₃ | W₁₃ |

As shown in Table 1, the analytics entries of the exception detection policy at the level #1 include: the quantity of calls initiated by the UE and the quantity of calls that are initiated by the UE and that are hung up.

A UE #1 is used as an example. That the UE #1 initiates a call may be that the UE #1 initiates a call to a called UE, and the called UE includes at least one UE. That the call initiated by the UE #1 is rejected may mean that the call initiated by the UE #1 is rejected by the called UE.

The analytics entries of the exception detection policy at the level #2 include: the quantity of times that the UE is called, the quantity of calls that are initiated by the UE and that are hung up, the ratio of the quantity of calls that are initiated by the UE and that are rejected to the quantity of calls initiated by the UE, the ratio of the quantity of calls that are initiated by the UE and that are hung up to the quantity of calls initiated by the UE, the ratio of the quantity of times that the UE serves as the calling party to the quantity of times that the UE serves as the called party, and the average quantity of calls initiated by the UE to each called UE.

A UE #1 is used as an example. That the UE #1 is called may be that a called UE initiates a call to the UE #1, and the called UE includes at least one UE. That a call initiated by the UE #1 is hung up may mean that the call initiated by the UE #1 is hung up by the called UE. If the UE#1 initiates a call to the called UE, the UE#1 serves as a calling party; otherwise, the UE#1 serves as a called party. A ratio of a quantity of times that the UE #1 serves as a calling party to a quantity of times that the UE#1 serves as a called party may be understood as a ratio of a quantity of calls initiated by the UE #1 to a quantity of times that the UE#1 is called. The UE #1 may initiate different quantities of calls to a plurality of called UEs. For example, the UE #1 initiates five calls to a called UE #2, and initiates seven calls to a called UE #3. In this case, an average quantity of calls initiated by the UE #1 to each called UE is 6.

The analytics entries of the exception detection policy at the level #3 include: the frequency at which the mobile equipment (mobile equipment, ME) of the UE is changed, the span of the identifier of the changed ME of the UE, the dispersion of the target area of the call of the UE, the dispersion of the call duration of the UE, the dispersion of the time point at which the UE initiates the call, and the like.

A UE #1 is used as an example. An ME of the UE #1 may be changed for a plurality of times. A frequency at which the ME of the UE #1 is changed may be determined based on a quantity of times that the ME of the UE #1 is changed in preset duration. The plurality of MEs have identifiers of the MEs, for example, international mobile equipment identities (International Mobile Equipment Identities, IMEIs). A span of the identifier of the changed ME of the UE #1 may be a span of the plurality of IMEIs. The span of the plurality of IMEIs may be determined by using content of the IMEIs. For example, if the content of the plurality of IMEIs is continuous, it may be considered that the span of the IMEIs is small. If the content of the IMEI is random and irregular, it may be considered that the span of the plurality of IMEIs is large. A dispersion of a target area of a call of the UE #1 may be a dispersion of area locations of a plurality of called UEs when the UE #1 initiates calls to the plurality of called UEs. A dispersion of call duration of the UE #1 may be a dispersion of duration of a call between the UE #1 and another UE, and the another UE may be a calling UE or may be called UE. The UE #1 may initiate calls to different called UEs at a plurality of moments. In this case, a dispersion of a time point at which the UE #1 initiates a call may be a dispersion of the plurality of moments.

Complexity of the exception detection policy at each level in Table 1 may be determined based on a size of a resource, a calculation amount, duration, and the like required for executing the exception detection policy.

For example, if the analytics network element counts, in a first preset time period, that a quantity of calls initiated by the UE and/or a quantity of calls that are initiated by the UE and that are hung up is greater than a threshold, the analytics network element may determine that an exception at the level #1 may exist in the UE. If a quantity of times that the UE is called in a second preset time period and that is counted by the analytics network element is less than the threshold, the analytics network element may determine that an exception at the level #2 may exist in the UE. Duration (first duration) of the second preset time period may be set to be greater than duration (second duration) of the first preset time period.

It may be understood that a difference between a quantity of calls initiated by a normal UE and a quantity of calls initiated by an abnormal UE in short duration may be large, and a difference between a quantity of times that the normal UE is called and a quantity of times that the abnormal UE is called may be small. To detect whether a UE is abnormal, preset duration for counting a quantity of times that the UE is called needs to be greater than preset duration for counting a quantity of calls initiated by the UE. Therefore, an exception detection policy for counting a quantity of calls initiated by the UE and/or the exception detection policy for counting the quantity of calls initiated by the UE may be grouped into one policy group, and the policy group corresponds to one policy group level (the level #1). An exception detection policy for counting a quantity of times that the UE is called may be grouped into another policy group. The policy group corresponds to another policy group level (the level #2). Complexity of exception detection at the level #1 and the level #2 may be measured based on preset detection duration (the first duration and the second duration).

For another example, the analytics network element may determine, by counting a quantity of calls initiated by the UE and/or a quantity of calls that are initiated by the UE and that are hung up, whether an exception at the level #2 exists in the UE. Alternatively, the analytics network element may determine, by collecting statistics on a ratio of the quantity of calls that are initiated by the UE and that are hung up to the quantity of calls initiated by the UE, whether an exception at the level #2 exists in the UE. It may be understood that calculation complexity of collecting, by the analytics network element, statistics on the ratio of the quantity of calls that are initiated by the UE and that are hung up to the quantity of calls initiated by the UE may be greater than complexity of counting, by the analytics network element, the quantity of calls initiated by the UE and/or the quantity of calls that are initiated by the UE and that are hung up. Therefore, an exception detection policy for counting a quantity of calls initiated by the UE and/or the exception detection policy for counting the quantity of calls initiated by the UE may be grouped into one policy group, and the policy group corresponds to one policy group level (the level #1). An exception detection policy for collecting statistics on a ratio of a quantity of calls that are initiated by the UE and that are hung up to a quantity of calls initiated by the UE may be grouped into one policy group. The policy group corresponds to one policy group level (the level #2). Complexity of exception detection at the level #1 and the level #2 may be measured based on calculation amounts.

For another example, further, the exception detection policy used by the analytics network element to determine whether the UE is abnormal may further include an exception detection policy corresponding to the level #3 in Table 1 (for example, collecting statistics on a dispersion of a target area of the call of the UE, and a dispersion of call duration of the UE). In comparison with the exception detection policies at the level #1 and the level #2, the exception detection policy at the level #3 that is executed by the analytics network element needs to take longer duration and have larger calculation amount.

It should be understood that the classification of the policy group levels is merely an example, and an exception detection policy corresponding to the policy group level may be any combination of the exception detection policies in Table 1. For example, some exception detection policies at the level #2 may be classified into the level #3. For another example, the exception detection policies at the level #2 or the level #3 are classified into more levels.

A policy group at at least one level may be preconfigured in the SMF #1, and the policy group at the at least one level includes at least one exception detection policy.

In a possible case, the policy group at the at least one level preconfigured in the SMF #1 may include a policy group at a lowest level, for example, an exception detection policy at the level #1 (an example of the first level in S230).

In another possible case, no exception detection policy at a lowest level may be configured in the SMF #1.

It may be understood that a statistical value of an analytics entry of the exception detection policy at the level #1 may be determined by counting a quantity of data packets of at least one session related to the UE. For example, if a UE #1 initiates a call to a UE #2, the UE #1 sends a data packet #1 to the UE #2, where the data packet #1 carries information about the call initiated by the UE #1 to the UE #2, and a quantity of calls initiated by the UE #1 to the UE #2 may be determined by counting a quantity of data packets #1. Therefore, the exception detection policy at the level #1 may be configured in another network element, for example, the UPF, that can count session data packets of the UE.

After receiving the request message #2, the SMF #1 may determine, based on the indication information #3, a level of exception detection to be performed on the UE in the UE list #2. If the indication information #3 indicates that the level of the exception detection to be performed on the UE in the UE list #2 is high (for example, indicates at least one of the level #2 and the level #3 in Table 1), the SMF #1 may first start exception detection at a lowest level (for example, the level #1 in Table 1) by default.

Optionally, the request message #2 may further include a policy number or an analytics entry. In other words, the NWDAF #1 may specify an exception detection policy for the SMF #1 to perform exception detection.

Optionally, the request message #2 may further include a threshold corresponding to the analytics entry. It may be understood that, when the request message #2 carries the threshold corresponding to the analytics entry, an SMF #2 may detect, based on the threshold carried in the request message #2, whether the UE is abnormal, instead of performing detection based on the preconfigured threshold.

In an example, if no exception detection policy at the lowest level (for example, the level #1) is configured in the SMF #1, for specific steps of determining, by the SMF #1, whether an exception at the level #1 exists in the UE #1, refer to S603a to S606a.

S603a: The SMF #1 sends a request message #3 to a UPF #1, where the request message #3 is used to request the UPF #1 to determine a transmission status of first data of the UE #1.

Correspondingly, the UPF #1 receives the request message #3 from the SMF #1.

The UE #1 is any UE in the UE list #2, and the UE #1 may be an example of the first terminal device in S210. The UPF #1 is a UPF to which the UE #1 belongs, and the UPF #1 may be an example of the first user plane network element in S210. The request message #3 may be an example of the fifth request message in S410.

The first data includes a data packet of at least one session of the UE #1 in the UPF #1. The statistical value of the analytics entry in the level #1 may be determined by determining a transmission status of the data packet of the at least one session of the UE #1 in the UPF #1.

For example, the at least one session includes a session #1, and the session #1 is a session used by the UE #1 to initiate a call. A data packet of the session #1 may include a data packet #1, and the data packet #1 indicates the UE #1 to initiate a call to at least one UE. The data packet of the session #1 may further include a data packet #2, and the data packet #2 includes a data packet that is sent by the at least one UE and that is for responding to the call initiated by the UE #1.

Specifically, the request message #3 may carry a packet detection rule (packet detection rule, PDR) #1. The PDR #1 may be an example of the PDR at the first level in S210, and the PDR #1 is used to match the first data.

For example, the PDR #1 may include a packet detection information (packet detection information, PDI) parameter, and the PDI parameter includes one or more match fields, to match a data packet received by the UPF and identify the data packet.

S604a: The UPF #1 determines, based on the request message #3, whether the exception at the level #1 exists in the UE #1.

Specifically, the UPF #1 collects, based on the request message #3, statistics about the first data that matches the PDR #1, and determines the transmission status of the first data. The UPF #1 determines, based on the transmission status of the first data and the exception detection policy at the level #1, whether the exception at the level #1 exists in the UE #1. For example, the UPF #1 determines, based on a value relationship between the transmission status of the first data and a first threshold, whether the exception at the level #1 exists in the UE #1.

For example, the UPF #1 executes the exception detection policy #1 in Table 1, which is referred to as a policy #1 for short below (a "policy number" is "1"). The UPF #1 matches, according to the PDR #1, a data packet #1 (an example of the first data packet) indicating that the UE #1 initiates a call. Specifically, after receiving a data packet, the UPF #1 matches the data packet with the PDR #1. If a source address of the data packet is an address of the UE #1, and a content type of the data packet is session establishment signaling, a counter, of the UPF #1, for counting a quantity of data packets #1 is increased by 1, in other words, the UPF #1 determines that a quantity of calls initiated by the UE #1 is increased by 1. In a preset time period, if the quantity that is counted by the UPF #1 and that is of calls that are initiated by the UE #1 is greater than or equal to the threshold #1 (for example, T₁ in Table 1), the UPF #1 determines that the exception at the level #1 may exist in the UE #1.

Similarly, if the UPF #1 executes the policy #2 (a "policy number" is "2") in Table 1, the UPF #1 matches, according to the PDR #1, a data packet #2 (an example of the first data packet) indicating that the call initiated by the UE #1 is rejected. Specifically, after the UPF #1 receives a data packet from an AF, the UPF #1 matches the data packet with the PDR #1. If a destination address of the data packet is the address of the UE #1, and a content type of the data packet is session canceling signaling, a counter, of the UPF #1, for counting a quantity of data packets #2, is increased by 1, in other words, the UPF #1 determines that a quantity of calls that are initiated by the UE #1 and that are rejected is increased by 1. In a preset time period, if the quantity that is counted by the UPF #1 and that is of calls that are initiated by the UE #1 and that are rejected is greater than or equal to a threshold #2 (for example, T₂ in Table 1), the UPF #1 determines that the exception at the level #1 may exist in the UE #1.

Optionally, the UPF #1 determines, with reference to the plurality of exception detection policies at the level #1, whether the exception at the level #1 exists in the UE #1. The UPF #1 may configure a total weight W of a case in which the exception at the level #1 exists in the UE. When a current total weight Wt of the UE is greater than or equal to W, the UPF #1 determines that the exception at the level #1 exists in the UE. Wt may be an accumulation of thresholds corresponding to policies triggered by the UE.

For example, the UPF #1 determines, with reference to the policy #1 and the policy #2, whether the exception at the level #1 exists in the UE. If the quantity of calls that are initiated by the UE #1 is greater than the threshold T₁, Wₜ=W₁. If the quantity of calls that are initiated by the UE #1 is greater than T₁, and the quantity of calls that are initiated by the UE #1 and that are rejected is greater than T₂, Wₜ=W₁+W₂. If Wₜ is greater than or equal to W, the UPF #1 may determine that the exception at the level #1 exists in the UE #1.

S605a: The UPF #1 sends indication information #1 to the SMF #1. Correspondingly, the SMF #1 receives the indication information #1 from the UPF #1.

The indication information #1 is information indicating that the exception at the level #1 exists in the UE #1. The indication information #1 may be an example of the information that indicates that the exception at the first level exists in the first terminal device and that is sent by the first user plane network element to the first analytics network element in S430.

The indication information #1 may include identification information of the UE #1.

Optionally, the indication information #1 may further include information about a policy triggered by the UE #1. For example, the information about the triggered policy may include an identifier of the triggered policy, an identifier of an event, a quantity of times that the event is triggered, and a time point of triggering the event.

The triggered event may be an event corresponding to at least one session of the UE #1. For example, if the UE #1 initiates a call to the UE #2, the UE #1 initiates a session #1, and the call initiated by the UE #1 to the UE #2 may be referred to as an event corresponding to the session #1. The UPF #1 may determine, by determining a data packet of the session #1, the event triggered by the UE #1. For example, a data packet #1 indicates that the UE #1 initiates a call to the UE #2. If the UPF #1 detects the data packet #1, the UPF #1 determines that the UE #1 triggers an event #1, and the event #1 is that the UE #1 initiates the call to the UE #2.

For example, the information about the policy triggered by the UE #1 is shown in Table 2. The information may be used by the SMF #1 to determine whether an exception at another level (for example, the level #2) exists in the UE #1.

**Table 2**

| UE identifier | Policy identifier | Event identifier | Quantity of times that an event is triggered |
|---|---|---|---|
| UE #1 | 1 (policy #1) | 1 (the UE #1 initiates a call to a UE #2) | N₁ (a quantity of calls initiated by the UE #1) |
| | | 2 (the UE #1 initiates a call to a UE #3) | |
| | | 3 (the call initiated by the UE #1 is rejected by the UE #2.) | N₂ (a quantity of calls that are initiated by the UE #1 and that are rejected) |

In another example, if the exception detection policy at the lowest level (for example, the level #1) is configured in the SMF #1, for specific steps of determining, by the SMF #1, whether the exception at the level #1 exists in the UE #1, refer to S603b to S606b.

S603b: The SMF #1 sends a request message #4 to the UPF #1, where the request message #4 is used to request to report a transmission status of first data of the UE #1.

The request message #4 may be an example of the first request message in S210. The request message #4 may carry a PDR #1. For specific content of the PDR #1, refer to the descriptions of S603a.

S604b: The UPF #1 sends the transmission status of the first data of the UE #1 to the SMF #1.

Specifically, the UPF #1 sends the transmission status of the first data of the UE #1 to the SMF #1 based on the request message. The transmission status of the first data of the UE #1 may include an identifier of the UE and an identifier of an event.

For example, the transmission status of the first data of the UE #1 is shown in Table 3.

**Table 3**

| UE identifier | Event identifier |
|---|---|
| UE #1 | 1 (the UE #1 initiates a call to a UE #2) |
| | 2 (the UE #1 initiates a call to a UE #3) |
| | 3 (the call initiated by the UE #1 is rejected by the UE #2.) |

The UPF #1 may send the transmission status of the first data of the UE #1 to the SMF #1 according to a preconfigured reporting rule. For example, the reporting rule may be that the transmission status of the first data of the UE #1 is reported when the UE triggers an event, or periodically reported.

S605b: The SMF #1 determines, based on the transmission status of the first data of the UE #1, whether the UE #1 is abnormal.

Specifically, the SMF #1 determines, based on the exception detection policy at the level #1 and the transmission status of the first data of the UE #1, whether the exception at the level #1 exists in the UE #1. For a specific manner in which the SMF #1 determines whether the exception at the level #1 exists in the UE #1, refer to the descriptions of determining, by the UPF #1, whether the UE #1 is abnormal in S604a.

It may be understood that exception detection at the level #1 performed by the SMF #1 on another UE in the UE list #2 is similar to the foregoing exception detection at the level #1 performed on the UE #1.

After the SMF #1 determines that there is a UE (denoted as a first UE) having the exception at the level #1 in the UE list #2, the SMF #1 may determine whether to continue to perform exception detection at another level on a UE in the first UE. There are three cases in which the SMF #1 determines whether to continue to perform the exception detection at the another level on the UE in the first UE.

### Case 1

S606a: The SMF #1 autonomously determines whether to continue to perform the exception detection at the another level on the UE in the first UE.

For example, the SMF #1 may perform the exception detection at the another level on the first UE by default, and the another level may be a level (for example, the level #2) configured in the SMF #1.

For another example, the SMF #1 may determine, based on a quantity of first UEs, whether to start exception detection at the level #2 for the first UE. For example, when the quantity of first UEs is greater than a threshold #3, the SMF #1 starts the exception detection at the level #2 on the first UE.

### Case 2

The SMF #1 may determine, through an NWDAF, whether to continue to perform the exception detection at the another level on the UE in the first UE. Specifically, the method may include the following steps.

S606b: The SMF sends a request message to an NWDAF #2. Correspondingly, the NWDAF #2 receives the request message.

The request message is used to request to determine whether to perform exception detection at the level #2 on the first UE.

The NWDAF #2 and the NWDAF #1 in the foregoing steps may be a same NWDAF, or may be different NWDAFs. For example, the NWDAF #2 may be an NWDAF that manages the NWDAF #1.

The request message may carry information indicating that the exception at the level #1 exists in the first UE. The request message may include an identifier of each UE in the first UE. Optionally, the request message may further include a level of a policy triggered by each UE in the first UE and a total weight of the policy triggered by each UE.

For example, the SMF #1 may send the request message to the NWDAF #2 according to a preconfigured reporting rule at a specified time point, after a list of first UEs is updated, or after a quantity of first UEs reaches a threshold.

S607a: The NWDAF #2 determines whether to start the exception detection at the level #2 for the first UE.

For example, the NWDAF #2 may directly deliver a request for the exception detection at the level #2 to the SMF #1 according to an operator policy, to request the SMF #2 to start the exception detection at the level #2 for the first UE.

For another example, the NWDAF #2 may determine, based on information such as a quantity of first UEs and a total weight of a policy triggered by each UE in the first UE, to deliver a request for the exception detection at the level #2 to the SMF #1, and request the SMF #1 to start the exception detection at the level #2 for the first UE.

Optionally, in S608a, before the NWDAF #2 delivers the request for the exception detection at the level #2 to the SMF #1, the NWDAF #2 may further send a request message to a PCF, where the request message is used to request the PCF to determine whether to perform the exception detection at the level #2 on the first UE. Correspondingly, the PCF receives the request message from the NWDAF #2.

The request message sent by the NWDAF #2 to the PCF may carry an identifier of the first UE. Optionally, the request message may further carry the level of the policy triggered by each UE in the first UE and the total weight of the policy triggered by each UE. The PCF may query policy information of the first UE based on the request message.

S609: The PCF determines, based on the policy information of the first UE, whether to perform the exception detection at the level #2 on the first UE.

For example, the PCF may query whether the first UE is a UE in a "whitelist", and the UE in the "whitelist" may be understood as a UE that there is no need to determine whether the UE is abnormal. If the first UE includes a UE (for example, the UE #1) in the "whitelist", the PCF deletes the UE #1 from the first UE, in other words, the PCF modifies the list of first UEs.

Optionally, after receiving the request message, the PCF may further determine whether the first UE includes a UE in a "blacklist". The UE in the "blacklist" may be understood as a UE with a high probability of being abnormal. If the first UE includes a UE (for example, the UE #2) in the "blacklist", the PCF deletes the UE #2 from the first UE. For another example, if a weight of a policy triggered by a UE in the first UE is large, the PCF may further add the UE to the "blacklist", to further manage the UE.

Further, the PCF may further specify, based on the request message, an exception detection policy of a part or all of UEs in the list of first UEs, a weight corresponding to the policy, and a threshold corresponding to an analytics entry in the policy. For example, the part of UEs may be a UE added by the PCF or a UE that is in the first UE and whose triggered policy has a high weight. For example, the PCF sends, to the part of UEs, a threshold and a weight that correspond to the policy #3. The threshold corresponding to the policy #3 may be less than a threshold T₃, and the weight may be greater than W₃, so that exception detection on the part of UEs can be enhanced.

Optionally, in S610, the PCF sends, to the NWDAF #2, information #1 indicating to perform the exception detection at the level #2 on the first UE. Correspondingly, the NWDAF #2 receives the information #1 from the PCF.

The information #1 may carry a list of UEs on which the exception detection at the level #2 needs to be performed, that is, a modified list of first UEs. The information #1 may further carry an exception detection policy for performing exception detection on a UE in the modified list of first UEs, a weight corresponding to the policy, and a threshold corresponding to an analytics entry in the policy.

S611: The NWDAF #2 sends a request message for the exception detection at the level #2 to the SMF #1, where the request message is used to request the SMF #1 to start the exception detection at the level #2 for the first UE, or is used to request the SMF #1 to start the exception detection at the level #2 for the modified first UE. Correspondingly, the SMF #1 receives the request message from the NWDAF #2.

### Case 3

The SMF #1 may directly determine, through a PCF, whether to continue to perform the exception detection at the another level on the UE in the first UE.

S606c: The SMF #1 sends a request message to the PCF, where the request message is used to request the PCF to determine whether to perform exception detection at the level #2 on the first UE. Correspondingly, the PCF receives the request message from the SMF #1.

S607b: The PCF determines whether to perform the exception detection at the level #2 on the first UE.

For the determining, by the PCF, whether to perform the exception detection at the level #2 on the first UE, refer to the descriptions of S609b.

S608b: The PCF sends, to the SMF #1, information #1 indicating to perform the exception detection at the level #2 on the first UE. Correspondingly, the SMF #1 receives the information #1 from the PCF.

In the foregoing manner, the SMF #1 may determine to start the exception detection at the level #2 for the first UE. Further, the SMF #1 determines, based on the exception detection policy at the level #2, whether an exception at the level #2 exists in the first UE.

For example, the first UE includes the UE #1. For determining, by the SMF, whether an exception at the level #2 exists in the UE #1, refer to S612 to S615.

S612: The SMF #1 sends a request message #5 to at least one UPF serving the UE #1, where the request message #5 is used to request the at least one UPF to report a transmission status of second data of the UE #1.

Correspondingly, the at least one UPF receives the request message #5 from the SMF #1.

For the at least one UPF serving the UE #1, refer to the descriptions of S240. The request message #5 may be an example of the second request message in S240. The request message #5 may carry a PDR #2, and the PDR #2 is used to match the second data.

For the second data, refer to the descriptions of the second data in S240.

For example, the second data includes a data packet of at least one session of the UE #1 in the at least one UPF. A statistical value of an analytics entry in the level #2 may be determined by determining a transmission status of the data packet of the at least one session of the UE #1 in the at least one UPF. For example, the at least one session includes a session #2, the session #2 is a session used by at least one UE to initiate a call to the UE #1, a data packet of the session #2 may include a data packet #2, and the data packet #2 indicates that the at least one UE initiates the call to the UE #1.

S613: A UPF #2 sends the transmission status of the second data of the UE #1 to the SMF #1.

Correspondingly, the SMF #1 receives the transmission status of the second data of the UE #1 from the UPF #2.

The UPF #2 is any one of the at least one UPF.

In a possible case, the at least one UPF includes the UPF #1. In other words, the UPF #2 and the UPF #1 may be a same UPF.

In another possible case, the at least one UPF does not include the UPF #1. In other words, the UPF #2 is any one of the at least one UPF that serves the UE #1 and that is other than the UPF #1.

Specifically, the UPF #2 collects, based on the request message #5, statistics about the second data that matches the PDR #2, and determines the transmission status of the second data. For example, the SMF #1 executes the policy #3 (a "policy number" is "3") in Table 1. After receiving the request message #4, the UPF #2 matches, according to the PDR #2, a data packet #2 (an example of the second data) indicating that the UE #1 is called. After receiving a data packet, the UPF #2 matches the data packet with the PDR #2. If a destination address of the data packet is the address of the UE #1, and a content type of the data packet is signaling of a session initiated by another terminal device to the UE #1, the UPF #2 determines that the UE #1 is called.

The transmission status of the second data of the UE #1 may include the identifier of the UE and an identifier of an event.

For example, the identifier of the event includes an identifier of an event #2, and the event #2 is that a UE #3 initiates a call to the UE #1. The UPF #2 may determine, by determining second data of a session #2, that the UE #3 initiates the call to the UE #1. For example, the second data of the session #2 includes a data packet #2, and the data packet #2 indicates that the UE #3 initiates a call to the UE #1. If the UPF #2 detects the data packet #2, the UPF #2 determines that the UE #1 triggers the event #2, and the UPF #2 sends the identifier of the event #2 to the SMF #1.

S614: The SMF #1 determines, based on the transmission status of the second data of the UE #1, whether an exception at the level #2 exists in the UE #1.

Specifically, the SMF #1 determines, based on the exception detection policy at the level #2 and the transmission status of the first data of the UE #1, whether the exception at the level #1 exists in the UE #1. For a specific manner in which the SMF #1 determines whether the exception at the level #1 exists in the UE #1, refer to the descriptions of determining, by the UPF #1, whether the UE #1 is abnormal in S432a.

For example, the transmission status of the second data of the UE #1 includes the identifier of the UE #1 and the identifier of the event #2. Each time after receiving the transmission status of the second data of the UE #1, the SMF may locally accumulate a counter #1, where the counter #1 is configured to count a quantity of times that the UE #1 is called. In a preset time period, if a quantity that is received by the SMF #1 and that is of events indicating that the UE #1 is called is greater than the threshold #2, the SMF #1 determines that the exception at the level #2 may exist in the UE #1.

For another example, the transmission status of the second data of the UE #1 includes the identifier of the UE #1 and an identifier of an event #3, and the event #3 indicates that a call initiated by the UE #1 is hung up. The SMF #1 may further count, based on the transmission status of the second data of the UE #1, a quantity of calls that are initiated by the UE #1 and that are hung up. In a preset time period, if a quantity that is received by the SMF #1 and that is of events indicating that the call initiated by the UE #1 is hung up is less than the threshold #2, the SMF #1 determines that the exception at the level #2 may exist in the UE #1.

For still another example, the transmission status of the second data of the UE #1 may further include an identifier of an event #1, and the event #1 indicates that the UE #1 initiates a call. The SMF #1 may further determine, based on the transmission status of the second data of the UE #1, a ratio of a quantity of calls that are initiated by the UE #1 and that are hung up to a quantity of calls initiated by the UE #1. If the ratio of the quantity of calls that are initiated by the UE #1 and that are hung up to the quantity of calls initiated by the UE #1 is less than a threshold, the SMF determines that the exception at the level #2 exists in the UE #1. Similarly, the SMF may further determine, based on a value relationship between a threshold and a ratio of a quantity of calls that are initiated by the UE #1 and that are rejected to the quantity of calls initiated by the UE #1, whether the exception at the level #2 exists in the UE #1.

Optionally, the SMF #1 may determine, with reference to a plurality of entries in the exception detection policy at the level #2, whether the exception at the level #2 exists in the UE #1. Specifically, this is similar to S604a in which the UPF #1 determines, with reference to the plurality of entries in the exception detection policy at the level #1, whether the exception at the level #1 exists in the UE #1.

It should be noted that, that the SMF #1 receives the transmission status of the second data of the UE #1 from the UPF #2 is merely an example, and the SMF #1 may receive the transmission status of the second data of the UE #1 from the at least one UPF serving the UE #1. Optionally, when the at least one UPF includes the UPF #1, the UPF #1 may directly send the transmission status of the second data of the UE #1 to the SMF #1, without a need of requesting by the SMF #1.

The SMF #1 analyzes whether the exception at the level #2 exists in the first UE, so that the list of abnormal UEs can be further reduced, and a false positive rate of an abnormal UE can be reduced, in other words, accuracy of detecting an abnormal terminal device can be improved.

S615: The SMF #1 sends a response message #2 to the NWDAF #1, where the response message #2 includes an identifier of a second UE, and the second UE is an abnormal UE in the UE list #2.

The response message #2 may be a response to the request message #2 in S602. Optionally, the response message #2 may further carry first information. The first information may include a set of identifiers of UE triggered policies and a total weight of the UE triggered policy. The first information is used by the NWDAF #1 to further determine whether an exception at another level (for example, the level #3) exists in the second UE. Information included in the response message #2 may be shown in a first row in Table 4.

**Table 4**

| UE identifier | Set of identifiers of UE triggered policies | Total weight of the current UE |
|---|---|---|
| UE #1 | ID1={3, 4, 5, 8} | W_{UE #1} |
| UE #2 | ID2={1, 2, 3} | W_{UE #2} |
| ... | ... | ... |
| UE #n | IDₙ | W_{UE #n} |

Optionally, the response message #2 may alternatively include information about the UE triggered policy (including the policy at the level #1 and the policy at the level #2). The information about the UE triggered policy may be used by the NWDAF #1 to determine whether the second UE is abnormal. Information included in the response message #2 is shown in a first row in Table 5.

**Table 5**

| UE identifier | Event identifier | Event information | Policy identifier | Quantity of times that an event is triggered |
|---|---|---|---|---|
| UE #1 | 1 (the UE#1 initiates a call) | For example, identification information of each called UE, address information of each called UE, and information about a time point at which the call is initiated to each called UE | 1 (policy #1) | N₁ (a quantity of calls initiated by the UE #1) |
| | 2 (a call initiated by the UE #1 is rejected) | For example, identification information of each called UE, and address information of each called UE | 2 (policy #2) | N₂ (a quantity of calls that are initiated by the UE# 1 and that are hung up) |
| | 4 (a call initiated by the UE #1 is hung up) | For example, identification information of each called UE, address information of each called UE, and information about a time point at which the call initiated by the UE #1 is hung up | 4 (policy #4) | N (a quantity of calls that are initiated by the UE# 1 and that are hung up) |

For example, the SMF #1 may send the response message #2 to the NWADF #1 based on a preconfigured sending condition, each time a list of second UEs is updated, at a specified time point or periodically, or when a quantity of second UEs exceeds a threshold.

Optionally, in S616, the NWDAF #1 determines whether the exception at the another level exists in the second UE.

It should be understood that the level of the exception determined by the NWDAF #1 may be different from the level of the exception determined by the SMF #1.

In a possible implementation, the NWDAF #1 may determine, in a manner in the conventional technology, whether the second UE is abnormal. For a detection procedure of the NWDAF #1, refer to descriptions in 3GPP TS 23.288. For example, the NWDAF #1 may request third data of the second UE from an AMF, where the third data may be, for example, access data or location data. The NWDAF #1 determines, based on the third data, whether the second UE is abnormal. For a specific manner in which the NWDAF #1 determines whether the second UE is abnormal, refer to existing related descriptions. Details are not described herein.

In another possible implementation, the NWDAF #1 determines, according to an exception detection policy supported by the NWDAF #1 for analytics, whether an exception at configured level exists in the second UE. For example, the SMF #1 determines that an exception at the level #2 exists in the second UE, and the NWDAF #1 may further determine whether an exception at the level #3 exists in the second UE.

In an example, the NWDAF #1 determines, based on the response message #2 reported by the SMF #1, whether the exception at the level #3 exists in the second UE. The information included in the response message #2 may be shown in Table 4. For example, the SMF #1 reports that a time point at which the UE #1 in second UE initiates a call to the UE #2 is t₂, and a time point at which the call of the UE #1 is hung up by the UE #2 is t₂. In this case, the NWDAF #1 may determine duration of the call between the UE #1 and the UE #2 based on the response message #2. The NWDAF #1 may further determine duration of a call between the UE #1 and another UE based on the response message #2, so that the NWDAF #1 may determine a dispersion of the call duration of the UE #1, and further determine whether an exception at the level #3 exists in the UE #1. Similarly, the NWDAF #1 may further determine, based on the response message #2, whether the UE #1 triggers another policy at the level #3, and determine, based on the policy triggered by the UE #1, whether the exception at the level #3 exists in the UE #1. Optionally, the NWDAF #1 may determine, with reference to a plurality of policies triggered by the UE #1, whether the exception at the level #3 exists in the UE #1.

In another example, the NWDAF #1 sends an event exposure subscription request (Event Exposure Subscribe Request) to the SMF #1 for a reduced list of UEs (second UEs), where the subscription request is used to request the SMF #1 to report a transmission status of second data of the second UE.

The transmission status that is of the second data of the second UE and that is reported by the SMF #1 may be obtained by using at least one UPF serving the second UE. For details, refer to the descriptions of S612 to S614. The SMF #1 may directly report the transmission status of the second data of the second UE to the NWDAF #1 through an N4 interface. For determining, by the NWDAF #1, whether the exception at the level #3 exists in the second UE, refer to the first example in the possible implementation.

Based on the foregoing solution, when the NWDAF #1 needs to perform "comprehensive detection" on a UE in a network, to be specific, needs to analyze behavior of as many UEs as possible in the network, the NWDAF #1 may reduce, by using at least one network element of the SMF and the UPF, a list of UEs that need to be detected, to reduce the load of the NWDAF #1. In addition, the SMF and the UPF reduce the list of UEs according to a configured exception detection policy, so that accuracy of detecting an abnormal UE can be improved.

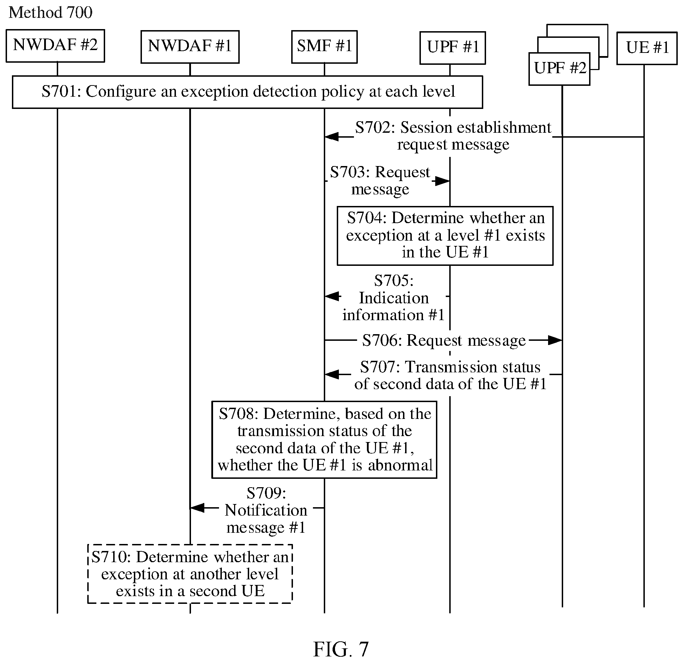

FIG. 7 is a diagram of another exception detection method 700 according to an embodiment of this application. In the method shown in FIG. 6, the NWDAF initiates a request for reducing a range of terminal devices that need to be analyzed, and another network element (for example, the SMF or the UPF) sends a reduced range of terminal devices to the NWDAF. In the method shown in FIG. 7, another network element (for example, an SMF or a UPF) may send a reduced range of terminal devices to an NWDAF. The method 700 may include the following steps.

S701: Preconfigure an exception detection policy at each level in a related NF (for example, an SMF, an AMF, or an NWDAF), where the exception detection policy at each level is shown in Table 1.

For example, an exception detection policy at a level #1 may be configured in a UPF, an exception detection policy at a level #2 may be configured in the SMF, and an exception detection policy at a level #3 may be configured in the NWDAF. The foregoing configuration of each network element is merely an example, and a specific level configured for each network element is not limited in this application. For example, the exception detection policy at the level #3 may be further configured in the SMF.

S702: The SMF receives a session establishment request message from a UE #1.

For example, the SMF may receive the session establishment request message from the UE #1 through the AMF, where the session establishment request message is used to request the SMF to establish a session of the UE #1. The SMF may select, based on the session establishment request message, a UPF serving the UE #1. The UPF serving the UE #1 includes at least one UPF. For how the SMF selects the UPF serving the UE #1, refer to related descriptions in the 3GPP TS 23.501 protocol.

S703: The SMF sends a request message to a UPF #1, where the request message is used to request the UPF #1 to determine a transmission status of first data of the UE #1. Correspondingly, the UPF #1 receives the request message #3 from the SMF.

The UPF #1 is one of the at least one UPF serving the UE #1, and the UPF #1 may be an example of the first user plane network element in S210. For related content of the request message and the first data, refer to the descriptions of S603a. Details are not described herein again.

S704: The UPF #1 determines, based on the request message, whether an exception at the level #1 exists in the UE #1.

For a specific process in which the UPF #1 determines, based on the request message, whether the exception at the level #1 exists in the UE #1, refer to the descriptions of S604a.

S705: The UPF #1 sends indication information #1 to the SMF. Correspondingly, the SMF receives the indication information #1 from the UPF #1.

The indication information #1 indicates that the exception at the level #1 exists in the UE #1. For content included in the indication information #1, refer to the descriptions of S605a.

It may be understood that the SMF may receive session request messages of a plurality of UEs in a preset time period. That the SMF analyzes whether an exception at the level #1 exists in the plurality of UEs is similar to that the SMF analyzes whether the exception at the level #1 exists in the UE #1. In other words, the SMF may determine, in the preset time period by using the at least one UPF, that the exception at the level #1 exists in at least one UE (denoted as a first UE).

After the SMF determines that the exception at the level #1 exists in the first UE, the SMF #1 may determine whether to continue to perform exception detection at another level on a UE in first UEs. There are three cases in which the SMF #1 determines whether to continue to perform the exception detection at the another level on the UE in the first UE.

Case 1: The SMF #1 may autonomously determine whether to continue to perform the exception detection at the another level on the UE in the first UE.

Case 2: The SMF #1 may determine, through the NWDAF, whether to continue to perform the exception detection at the another level on the UE in the first UE. For details, refer to the descriptions of S606b, S607a to S608a, and S609 to S611.

Case 3: The SMF #1 may determine, through a PCF, whether to continue to perform the exception detection at the another level on the UE in the first UE. For details, refer to the descriptions of S606c, S607b, and S608b.

After the SMF #1 determines to start exception detection at the level #2 for the first UE, the SMF #1 determines, according to the exception detection policy at the level #2, whether an exception at the level #2 exists in the first UE.

For example, the SMF determines whether an exception at another level (for example, the level #2) exists in the UE #1 in the first UE. The process may include S706 to S709.

S706: The SMF sends a request message to the at least one UPF serving the UE #1, where the request message is used to request the at least one UPF to report a transmission status of second data of the UE #1.

Correspondingly, the at least one UPF receives the request message from the SMF.

For this step, refer to related descriptions of S612.

S707: A UPF #2 sends the transmission status of the second data of the UE #1 to the SMF #1.

Correspondingly, the SMF #1 receives the transmission status of the second data of the UE #1 from the UPF #2.

The UPF #2 is any one of the at least one UPF.

In a possible case, the at least one UPF includes the UPF #1. In other words, the UPF #2 and the UPF #1 may be a same UPF.

In another possible case, the at least one UPF does not include the UPF #1. In other words, the UPF #2 is any one of the at least one UPF that serves the UE #1 and that is other than the UPF #1.

The transmission status of the second data of the UE #1 may include an identifier of the UE and an identifier of an event. For details, refer to related descriptions of S453.

S708: The SMF determines, based on the transmission status of the second data of the UE #1, whether the exception at the another level exists in the UE #1.

For a specific implementation, refer to the descriptions of S615.

S709: The SMF sends a notification message #1 to the NWDAF #1, where the notification message #1 includes an identifier of a second UE, and the second UE is an abnormal UE in the first UE.

For the notification message #1, refer to the response message #2 in S616.

In a possible implementation, the SMF sends the notification message #1 to the NWDAF #1 in a first periodicity. The first periodicity may be set based on an actual situation. In other words, the SMF determines, in preset duration, that the first UE is abnormal, and the SMF sends, to the NWDAF #1, information indicating that the first UE is abnormal.

S710: The NWDAF #1 determines whether an exception at another level exists in the second UE.

For this step, refer to the descriptions of S617.

Based on the foregoing solution, when a UE establishes a session, the SMF may analyze whether the UE is abnormal, and report, to the NWDAF, that the abnormal UE exists in a network. The NWDAF further determines whether another exception exists in the abnormal UE in the network, so that a load of the NWDAF can be reduced, and accuracy of detecting an abnormal UE can be improved.

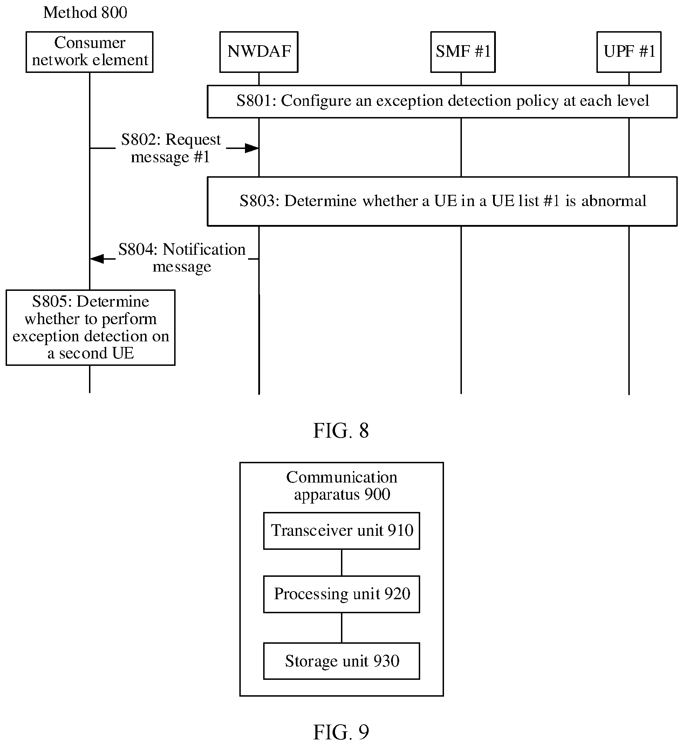

FIG. 8 is a diagram of another exception detection method 800 according to an embodiment of this application. In the method shown in FIG. 8, the AF may specify an exception level for performing exception analytics on the terminal device. The method 800 may include the following steps.

S801: Preconfigure an exception detection policy at each level in a related NF (for example, an SMF, an AMF, or an NWDAF), where the exception detection policy at each level is shown in Table 1.

For example, an exception detection policy at a level #1 may be configured in a UPF, an exception detection policy at a level #2 may be configured in the SMF, and an exception detection policy at a level #3 may be configured in the NWDAF. The foregoing configuration of each network element is merely an example, and a specific level configured for each network element is not limited in this application. For example, the exception detection policy at the level #3 may be further configured in the SMF.

S802: The AF sends a request message #1 to the NWDAF, where the request message #1 is used to request the NWDAF to analyze whether a UE in a UE list #1 is abnormal.

It should be noted that the AF may belong to an operator network or a third party. When the AF belongs to a third party, the AF may send the request message #1 to the NWDAF through an NEF.

The request message #1 may include an identifier of the UE in the UE list #1, in other words, the identifier of the terminal device to be analyzed by the NWDAF is specified by the AF. The request message further includes indication information #4, and the indication information #4 indicates an exception level. For example, an exception level of the terminal device and an exception detection policy corresponding to each exception level may be preconfigured in the AF. For the exception level and the exception detection policy, refer to the descriptions of S602.

Optionally, the request message #1 further includes at least one of a threshold corresponding to each exception detection policy and a weight corresponding to each exception detection policy.

In other words, in this embodiment, the AF may specify an exception level of the terminal device to be analyzed by the NWDAF. Optionally, the AF may further specify a threshold and a weight of an exception detection policy corresponding to the exception level.

S803: The NWDAF determines whether the UE in the UE list #1 is abnormal.

There may be two cases in which the NWDAF analyzes, based on the exception level specified by the AF, whether the UE in the UE list #1 is abnormal.

Case 1: The NWDAF sends a request message to the SMF based on a specified level, where the request message is used to request the SMF to determine whether an exception at the specified level exists in the UE in the UE list #1.

It may be understood that, in this case, the exception level specified by the AF may be an exception level (for example, the level #1 or the level #2) that can be analyzed by the SMF or the UPF.

For example, the AF may specify the NWDAF to analyze whether an exception at the level #1 and/or an exception at the level #2 exist/exists in the UE in the UE list #1. For determining, by the NWDAF, whether the exception at the level #1 and/or the exception at the level #2 exist/exists in the UE in the UE #1 list #1, refer to the descriptions of S602 to S616 in FIG. 6. Details are not described again.

Optionally, if the AF specifies an exception detection policy at each exception level, a threshold corresponding to the exception detection policy, and a weight corresponding to the exception detection policy, the NWDAF performs exception detection based on the exception detection policy specified by the AF, the threshold corresponding to the exception detection policy, and the weight corresponding to the exception detection policy.

Case 2: The NWDAF analyzes, based on the specified exception level, whether the UE in the UE list #1 is abnormal.

It may be understood that, in this case, the exception level indicated by the AF is a level supported by the NWDAF for analytics. For example, the AF may indicate the NWDAF to analyze whether an exception at the level #3 exists in the UE in the UE list #1.

In an example, if the indication received by the NWDAF is to analyze whether the exception at the level #3 exists in the UE in the UE list #1, the NWDAF may start exception detection at the level #1 and exception detection at the level #2 for the UE in the UE list #1 by default. The NWDAF detects whether the exception at the level #3 exists in the first UE. The first UE is a UE that is in the UE list #1 and that has an exception at the level #1 and/or an exception at the level #2. For determining, by the NWDAF, whether the exception at the level #1 and/or the exception at the level #2 exist/exists in the UE in the UE #1 list #1, refer to S602 to S616 in FIG. 6. The NWDAF may further analyze whether an exception at the level #3 exists in the first UE. For this step, refer to the descriptions in S617.

In another example, if the indication received by the NWDAF is to analyze whether the exception at the level #3 exists in the UE in the UE list #1, the NWDAF starts exception detection at the level #3 for the UE in the UE list #1. For details, refer to the descriptions of S617 in FIG. 6.

S804: The NWDAF sends a notification message to the AF, where the notification message includes an identifier of a second UE, and the second UE is UE that is in the UE list #1 and that is abnormal. Correspondingly, the AF receives the notification message from the NWDAF.

Optionally, the notification message may further include an exception level of an exception triggered by the second UE, an identifier of an exception detection policy corresponding to the exception level, a threshold corresponding to the exception detection policy, and a total weight of a policy triggered by each UE in the second UE.

S805: The AF determines whether to perform exception detection on the second UE.

For example, the AF may determine, based on the notification message, whether to perform the exception detection on the second UE.

For example, if the quantity of second UEs exceeds a preset threshold, the AF determines to perform the exception detection on the second UE.

Optionally, the AF may alternatively determine, based on a requirement of an application layer, whether to perform the exception detection on the second UE.

For example, in the foregoing step, the AF indicates to perform analytics at the level #1 on the UE in the UE list #1. Correspondingly, the second UE is a UE having an exception at the level #1 in the UE list #1. The AF may further request, based on a requirement of the application layer, the NWDAF to detect whether an exception at another level (for example, the level #2 or the level #3) exists in the second UE.

Optionally, the AF may further determine, based on the notification message, the weight of the policy triggered by each UE in the second UE. The AF indicates the NWDAF to perform exception detection on a UE that is in the second UE and whose triggered policy has a high weight. In other words, the AF may perform the exception detection on a part of UEs in the second UE. Alternatively, the AF may add, based on an indication of an application layer, a list of UEs on which exception detection needs to be performed. In other words, the AF may modify the list of second UEs (add or delete a part of UEs).

Optionally, if the AF determines to perform the exception detection on the second UE, the AF may further specify an exception detection policy at each exception level, a threshold corresponding to exception detection, and a weight corresponding to the exception detection policy. Subsequently, the NWDAF performs detection based on the exception detection policy specified by the AF, the threshold corresponding to the exception detection policy, and the weight corresponding to the exception detection policy.

That the AF requests to determine whether the second UE is abnormal is similar to that the AF requests to analyze whether the UE in the UE list #1 is abnormal. Details are not described again.

The foregoing steps are repeated until information that is about an abnormal UE and that is sent by the NWDAF satisfies a requirement of the AF. For example, the information about the abnormal UE may include a quantity of abnormal UEs, an exception level triggered by the abnormal UE, and a weight of a policy triggered by the abnormal UE.

Based on the foregoing solution, when the NWDAF needs to perform exception detection on a UE specified by the AF, the NWDAF may reduce, by using at least one network element of the SMF and the UPF, a list of UEs that need to be detected, to reduce a load of the NWDAF. In addition, the SMF and the UPF reduce the list of UEs according to a configured exception detection policy, so that accuracy of detecting an abnormal UE can be improved.

It should be understood that specific examples in embodiments of this application are merely intended to help a person skilled in the art better understand embodiments of this application, but are not intended to limit the scope of embodiments of this application.

It should be understood that sequence numbers of the foregoing processes do not mean a sequence of performing the processes. The sequence of performing the processes should be determined according to functions and internal logic of the processes, and should not be construed as any limitation on the implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that, in the foregoing embodiments of this application, a method implemented by using a communication device may be alternatively implemented by using a component (for example, a chip or a circuit) that can be disposed inside the communication device.

The exception detection methods provided in embodiments of this application are described above in detail with reference to FIG. 2A to FIG. 8. The exception detection method is mainly described from a perspective of interaction between network elements. It may be understood that, to implement the foregoing functions, each network element includes a corresponding hardware structure and/or software module for performing each function. A person skilled in the art should be able to be aware that, in combination with units and algorithm steps of the examples described in embodiments disclosed in this specification, this application may be implemented by using hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

The following describes in detail communication apparatuses and a system provided in embodiments of this application with reference to FIG. 9 to FIG. 11. It should be understood that descriptions of apparatus embodiments correspond to the descriptions of the method embodiments. Therefore, for content that is not described in detail, refer to the foregoing method embodiments. For brevity, a part of content is not described again.

FIG. 9 is a schematic block diagram of a communication apparatus 900 according to an embodiment of this application. As shown in the figure, the communication apparatus 900 may include a transceiver unit 910 and a processing unit 920.

In a possible design, the communication apparatus 900 may be the first user plane network element in the foregoing method embodiments, or may be a chip configured to implement a function of the first user plane network element in the foregoing method embodiments.

It should be understood that the communication apparatus 900 may correspond to the first user plane network element in the method 200 to the method 500, or correspond to the UPF in the method 600, the method 700, and the method 800 in embodiments of this application. The communication apparatus 900 may include a unit configured to perform the method performed by the first user plane network element in the methods in FIG. 2A to FIG. 5C. In addition, the units in the communication apparatus 900 and the foregoing other operations and/or functions are separately used to implement corresponding procedures of the method 200 in FIG. 2A, FIG. 2B, AND FIG. 2C or the method 800 in FIG. 8. It should be understood that a specific process in which the units perform the foregoing corresponding steps is described in detail in the foregoing method embodiments, and for brevity, details are not described herein.

In another possible design, the communication apparatus 900 may be the first session management network element in the foregoing method embodiments, or may be a chip configured to implement a function of the first session management network element in the foregoing method embodiments.

It should be understood that the communication apparatus 900 may correspond to the first session management network element in the method 200 to the method 500, or correspond to the SMF in the method 600, the method 700, and the method 800 in embodiments of this application. The communication apparatus 900 may include a unit configured to perform the method performed by the first session management network element in the method 200 in FIG. 2A, FIG. 2B, AND FIG. 2C to the method 500 in FIG. 5A, FIG. 5B, AND FIG. 5C. In addition, the units in the communication apparatus 900 and the foregoing other operations and/or functions are separately used to implement corresponding procedures of the method 200 in FIG. 2A, FIG. 2B, AND FIG. 2C or the method 800 in FIG. 8. It should be understood that a specific process in which the units perform the foregoing corresponding steps is described in detail in the foregoing method embodiments, and for brevity, details are not described herein.

In another possible design, the communication apparatus 900 may be the network data analytics function network element in the foregoing method embodiments, or may be a chip configured to implement a function of the network data analytics function network element in the foregoing method embodiments.

It should be understood that the communication apparatus 900 may correspond to the first network data analytics function network element, the second network data analytics function network element, or the third network data analytics function network element in the method 200 to the method 500, or correspond to the NWDAF in the method 600 to the method 800 in embodiments of this application. The communication apparatus 900 may include a unit configured to perform the method performed by the NWDAF in the method 200 in FIG. 2A, FIG. 2B, AND FIG. 2C to the method 800 in FIG. 8. In addition, the units in the communication apparatus 900 and the foregoing other operations and/or functions are separately used to implement corresponding procedures of the method 200 in FIG. 2A, FIG. 2B, AND FIG. 2C or the method 800 in FIG. 8. It should be understood that a specific process in which the units perform the foregoing corresponding steps is described in detail in the foregoing method embodiments, and for brevity, details are not described herein.

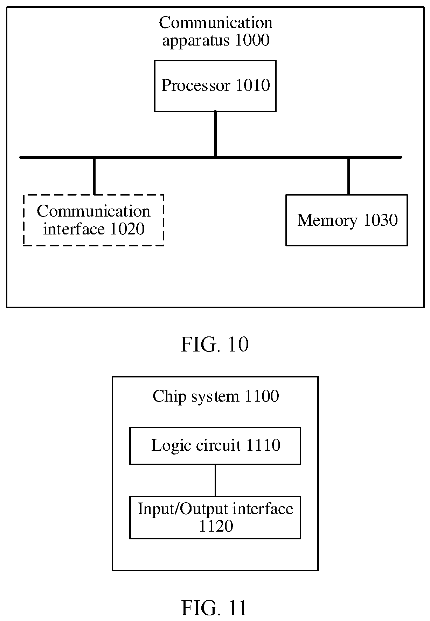

It should be further understood that the transceiver unit 910 in the communication apparatus 900 may correspond to a transceiver 1020 in a communication device 1000 shown in FIG. 10. The processing unit 920 in the communication apparatus 900 may correspond to a processor 1010 in the communication device 1000 shown in FIG. 10.

It should be further understood that when the communication apparatus 900 is a chip, the chip includes a transceiver unit. For example, the chip may further include a processing unit. The transceiver unit may be an input/output circuit or a communication interface. The processing unit may be a processor, a microprocessor, or an integrated circuit integrated on the chip.

The transceiver unit 910 is configured to implement signal receiving and sending operations of the communication apparatus 900, and the processing unit 920 is configured to implement a signal processing operation of the communication apparatus 900.

For example, the communication apparatus 900 further includes a storage unit 930, and the storage unit 930 is configured to store instructions.

FIG. 10 is a schematic block diagram of the communication device 1000 according to an embodiment of this application. As shown in FIG. 10, the communication apparatus 1000 includes at least one processor 1010 and the communication interface 1020. The processor 1010 is coupled to a memory, and is configured to execute instructions stored in the memory, to control the communication interface 1020 to send a signal and/or receive a signal. For example, the communication apparatus 1000 further includes a memory 1030, configured to store instructions.

It should be understood that the processor 1010 and the memory 1030 may be combined into one processing apparatus. The processor 1010 is configured to execute program code stored in the memory 1030, to implement the foregoing functions. During specific implementation, the memory 1030 may alternatively be integrated into the processor 1010, or may be independent of the processor 1010.

It should be further understood that, in a possible design, the communication interface 1020 may include a receiver (or referred to as a receiving machine) and a transmitter (or referred to as a transmitting machine). The communication interface 1020 may further include an antenna and there may be one or more antennas. The communication interface 1020 may alternatively be an interface circuit.

When the communication device 1000 is a chip, the chip includes a transceiver unit and a processing unit. The transceiver unit may be an input/output circuit or a communication interface. The processing unit may be a processor, a microprocessor, or an integrated circuit integrated on the chip.

FIG. 11 is a diagram of a chip system according to an embodiment of this application. The chip system herein may also be a system including a circuit. The chip system 1100 shown in FIG. 11 includes a logic circuit 1110 and an input/output interface (input/output interface) 1120. The logic circuit is configured to: be coupled to the input interface, and transmit data (for example, first indication information) through the input/output interface, to perform the methods in FIG. 2A to FIG. 8.

An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

In an implementation process, the steps in the foregoing methods can be implemented by using a hardware integrated logical circuit in the processor, or by using instructions in a form of software. Steps of the methods provided with reference to embodiments of this application may be directly executed and accomplished by a hardware processor, or may be executed and accomplished by using a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments can be implemented by using a hardware integrated logical circuit in the processor, or by using instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor, or the like.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache.

According to the method provided in embodiments of this application, this application further provides a computer program product. The computer program product includes computer program code. When the computer program code is run on a computer, the computer is enabled to perform the method in any one of the embodiments shown in FIG. 2A to FIG. 6C.

According to the method provided in embodiments of this application, this application further provides a computer-readable medium. The computer-readable medium stores program code. When the program code is run on a computer, the computer is enabled to perform the method in any one of the embodiments shown in FIG. 2A to FIG. 6C.

According to the method provided in embodiments of this application, this application further provides a communication system. The communication system includes the first analytics network element and the first user plane network element. For example, the first analytics network element may be a session management network element, for example, the first session management network element. The first analytics network element may be a network data analytics function network element, for example, the second network data analytics function network element. The communication system may further include a second analytics network element. For example, the second analytics network element may be a network data analytics function network element, for example, the first network data analytics function network element. The communication system may further include a third analytics network element, an application function network element, and a policy management function network element. The third analytics network element may alternatively be a network data analytics function network element, for example, the third network data analytics function network element. The communication system may further include at least one user plane network element serving a first terminal device, and the first terminal device is any one of terminal devices on which exception detection needs to be performed.

A person of ordinary skill in the art may be aware that, in combination with units and algorithm steps of the examples described in embodiments disclosed in this specification, this application may be implemented by using electronic hardware or a combination of computer software and electronic hardware. Whether the function is performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementations. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An exception detection method, wherein the method comprises:
sending a first request message to a first user plane network element, wherein the first request message is used to request to report a transmission status of first data of a first terminal device;
receiving the transmission status of the first data from the first user plane network element;
when determining, based on an exception detection policy at a first level and the transmission status of the first data, that an exception at the first level exists in the first terminal device, sending a second request message to at least one user plane network element serving the first terminal device, wherein the second request message is used to request to report a transmission status of second data of the first terminal device; and
determining, based on an exception detection policy at a second level and the transmission status of the second data, whether an exception at the second level exists in the first terminal device.

2. The method according to claim 1, wherein the exception detection policy at the first level comprises a correspondence between the transmission status of the first data and a first threshold for determining whether the exception at the first level exists, and the exception detection policy at the second level comprises a correspondence between the transmission status of the second data and a second threshold for determining whether the exception at the second level exists.

3. The method according to claim 1 or 2, wherein the transmission status of the first data comprises at least one of the following:
a quantity of data packets of at least one session of the first terminal device in the first user plane network element, a transmission speed of the data packet of the at least one session of the first terminal device in the first user plane network element, a transmission dispersion of the data packet of the at least one session of the first terminal device in the first user plane network element, and a ratio between quantities of different types of data packets of the first terminal device in the first user plane network element.

4. The method according to any one of claims 1 to 3, wherein the transmission status of the second data comprises one or more of the following:
a quantity of data packets of at least one session of the first terminal device in any one of the at least one user plane network element, a transmission speed of a data packet of at least one session of the first terminal device in any one of the at least one user plane network element, a transmission dispersion of a data packet of at least one session of the first terminal device in any one of the at least one user plane network element, or a ratio between quantities of different types of data packets of the first terminal device.

5. The method according to any one of claims 1 to 4, wherein
the sending a first request message to a first user plane network element comprises: sending, by a first analytics network element, the first request message to the first user plane network element; and
the receiving the transmission status of the first data from the first user plane network element comprises: receiving, by the first analytics network element, the transmission status of the first data from the first user plane network element; and
the determining that an exception at the first level exists in the first terminal device comprises: determining, by the first analytics network element, that the exception at the first level exists in the first terminal device;
the sending a second request message to at least one user plane network element comprises: sending, by a second analytics network element, the second request message to the at least one user plane network element; and
the determining whether an exception at the second level exists in the first terminal device comprises: determining, by the second analytics network element, whether the exception at the second level exists in the first terminal device, wherein
a service range of the first analytics network element is smaller than a service range of the second analytics network element.

6. The method according to claim 5, wherein the method further comprises:
sending, by the first analytics network element to the second analytics network element, information indicating that the exception at the first level exists in the first terminal device.

7. The method according to claim 5 or 6, wherein the method further comprises:
if the second analytics network element determines that the exception at the second level exists in the first terminal device, feeding back, by the second analytics network element to a policy control network element or an application function network element, information indicating that the exception at the second level exists in the first terminal device; or
if the second analytics network element determines that the exception at the second level does not exist in the first terminal device, feeding back, by the second analytics network element to a policy control network element or an application function network element, the information indicating that the exception at the first level exists in the first terminal device.

8. The method according to any one of claims 1 to 7, wherein before the sending a first request message to a first user plane network element, the method further comprises:
receiving information for requesting to analyze whether at least one terminal device is abnormal, wherein the at least one terminal device comprises the first terminal device; and
the sending a first request message to a first user plane network element comprises:
sending the first request message to the first user plane network element based on the information for requesting to analyze whether the at least one terminal device is abnormal.

9. The method according to any one of claims 1 to 8, wherein before the sending a second request message to at least one user plane network element, the method further comprises:
sending information for determining whether exception detection at the second level needs to be performed on the first terminal device; and
receiving information indicating that the exception detection at the second level needs to be performed on the first terminal device.

10. The method according to any one of claims 1 to 9, wherein the method further comprises:
determining a packet detection rule PDR at the first level according to the exception detection policy at the first level, wherein the PDR at the first level is used to detect the first data, and the first request message comprises information indicating the PDR at the first level; and
determining a PDR at the second level according to the exception detection policy at the second level, wherein the PDR at the second level is used to detect the second data, and the second request message comprises information indicating the PDR at the second level.

11. An exception detection method, comprising:
receiving, by a first user plane network element, a request message for requesting to determine a transmission status of first data of a first terminal device;
determining, by the first user plane network element based on an exception detection policy at a first level and the transmission status of the first data, that an exception at the first level exists in the first terminal device;
sending, by the first user plane network element to an analytics network element, information indicating that the exception at the first level exists in the first terminal device;
receiving, by the first user plane network element, a second request message from the analytics network element, wherein the second request message is used to request to report a transmission status of second data of the first terminal device; and
reporting, by the first user plane network element, the transmission status of the second data of the first terminal device to the analytics network element, wherein the transmission status of the second data is used to determine whether an exception at a second level exists in the first terminal device.

12. The method according to claim 11, wherein the exception detection policy at the first level comprises a correspondence between the transmission status of the first data and a first threshold for determining whether the exception at the first level exists.

13. The method according to claim 11 or 12, wherein the transmission status of the first data comprises at least one of the following:
a quantity of data packets of at least one session of the first terminal device in the first user plane network element, a transmission speed of the data packet of the at least one session of the first terminal device in the first user plane network element, a transmission dispersion of the data packet of the at least one session of the first terminal device in the first user plane network element, and a ratio between quantities of different types of data packets of the first terminal device in the first user plane network element.

14. The method according to any one of claims 11 to 13, wherein the request message for requesting to determine the transmission status of the first data of the first terminal device comprises information indicating a packet detection rule PDR at the first level, and the PDR at the first level is used to detect the first data; and the second request message comprises information indicating a PDR at the second level, and the PDR at the second level is used to detect the second data.

15. A communication apparatus, wherein the apparatus comprises a transceiver unit and a processing unit, wherein
the transceiver unit is configured to send a first request message to a first user plane network element, wherein the first request message is used to request to report a transmission status of first data of a first terminal device;
the transceiver unit is further configured to receive the transmission status of the first data from the first user plane network element;
when it is determined, based on an exception detection policy at a first level and the transmission status of the first data, that an exception at the first level exists in the first terminal device, the transceiver unit is further configured to send a second request message to at least one user plane network element serving the first terminal device, wherein the second request message is used to request to report a transmission status of second data of the first terminal device; and
the processing unit is configured to determine, based on an exception detection policy at a second level and the transmission status of the second data, whether an exception at the second level exists in the first terminal device.

16. The apparatus according to claim 15, wherein the exception detection policy at the first level comprises a correspondence between the transmission status of the first data and a first threshold for determining whether the exception at the first level exists, and the exception detection policy at the second level comprises a correspondence between the transmission status of the second data and a second threshold for determining whether the exception at the second level exists.

17. The apparatus according to claim 15 or 16, wherein the transmission status of the first data comprises at least one of the following:
a quantity of data packets of at least one session of the first terminal device in the first user plane network element, a transmission speed of the data packet of the at least one session of the first terminal device in the first user plane network element, a transmission dispersion of the data packet of the at least one session of the first terminal device in the first user plane network element, and a ratio between quantities of different types of data packets of the first terminal device in the first user plane network element.

18. The apparatus according to any one of claims 15 to 17, wherein the transmission status of the second data comprises one or more of the following:
a quantity of data packets of at least one session of the first terminal device in any one of the at least one user plane network element, a transmission speed of a data packet of at least one session of the first terminal device in any one of the at least one user plane network element, a transmission dispersion of a data packet of at least one session of the first terminal device in any one of the at least one user plane network element, or a ratio between quantities of different types of data packets of the first terminal device.

19. The apparatus according to any one of claims 15 to 18, wherein the processing unit is further configured to determine that the exception at the first level exists in the first terminal device.

20. The apparatus according to claim 18 or 19, wherein the transceiver unit is further configured to:
feed back, to a policy control network element or a second application function network element, information indicating that the exception at the second level exists in the first terminal device; or
feed back, to a policy control network element or a second application function network element, information indicating that the exception at the first level exists in the first terminal device.

21. The apparatus according to any one of claims 15 to 20, wherein the transceiver unit is further configured to:
receive information for requesting to analyze whether at least one terminal is abnormal, wherein the at least one terminal comprises the first terminal device; and
the transceiver unit is specifically configured to:
send the first request message to the first user plane network element based on the information for requesting to analyze whether the at least one terminal is abnormal.

22. The apparatus according to any one of claims 15 to 21, wherein the transceiver unit is further configured to:
send information for determining whether exception detection at the second level needs to be performed on the first terminal device; and
receiving information indicating that the exception detection at the second level needs to be performed on the first terminal device.

23. The apparatus according to any one of claims 15 to 22, wherein the processing unit is further configured to:
determine a packet detection rule PDR at the first level according to the exception detection policy at the first level, wherein the PDR at the first level is used to detect the first data, and the first request message comprises information indicating the PDR at the first level; and
determine a PDR at the second level according to the exception detection policy at the second level, wherein the PDR at the second level is used to detect the second data, and the second request message comprises information indicating the PDR at the second level.

24. A communication system, wherein the system comprises a first analytics network element and a second analytics network element, wherein
the first analytics network element is configured to send a first request message to a first user plane network element, wherein the first request message is used to request to report a transmission status of first data of a first terminal device;
the first analytics network element is further configured to receive the transmission status of the first data from the first user plane network element;
when determining, based on an exception detection policy at a first level and the transmission status of the first data, that an exception at the first level exists in the first terminal device, the second analytics network element is configured to send a second request message to at least one user plane network element serving the first terminal device, wherein the second request message is used to request to report a transmission status of second data of the first terminal device; and
the second analytics network element is further configured to determine, based on an exception detection policy at a second level and the transmission status of the second data, whether an exception at the second level exists in the first terminal device, wherein a service range of the first analytics network element is smaller than a service range of the second analytics network element.

25. The system according to claim 24, wherein the exception detection policy at the first level comprises a correspondence between the transmission status of the first data and a first threshold for determining whether the exception at the first level exists, and the exception detection policy at the second level comprises a correspondence between the transmission status of the second data and a second threshold for determining whether the exception at the second level exists.

26. The system according to claim 24 or 25, wherein the transmission status of the first data comprises at least one of the following:
a quantity of data packets of at least one session of the first terminal device in the first user plane network element, a transmission speed of the data packet of the at least one session of the first terminal device in the first user plane network element, a transmission dispersion of the data packet of the at least one session of the first terminal device in the first user plane network element, and a ratio between quantities of different types of data packets of the first terminal device in the first user plane network element.

27. The system according to any one of claims 24 to 26, wherein the transmission status of the second data comprises one or more of the following:
a quantity of data packets of at least one session of the first terminal device in any one of the at least one user plane network element, a transmission speed of a data packet of at least one session of the first terminal device in any one of the at least one user plane network element, a transmission dispersion of a data packet of at least one session of the first terminal device in any one of the at least one user plane network element, or a ratio between quantities of different types of data packets of the first terminal device.

28. The system according to any one of claims 24 to 27, wherein
the first analytics network element is further configured to determine that the exception at the first level exists in the first terminal device; and
the first analytics network element is further configured to send, to the second analytics network element, information indicating that the exception at the first level exists in the first terminal device.

29. The system according to claim 28, wherein
if the second analytics network element determines that the exception at the second level exists in the first terminal device, the second analytics network element is further configured to feed back, to a policy control network element or an application function network element, information indicating that the exception at the second level exists in the first terminal device; or
if the second analytics network element determines that the exception at the second level does not exist in the first terminal device, the second analytics network element is further configured to feed back, to a policy control network element or an application function network element, the information indicating that the exception at the first level exists in the first terminal device.

30. The system according to any one of claims 24 to 29, wherein
the first analytics network element is further configured to receive information for requesting to analyze whether at least one terminal device is abnormal, wherein the at least one terminal device comprises the first terminal device; and
the first analytics network element is specifically configured to:
send the first request message to the first user plane network element based on the information for requesting to analyze whether the at least one terminal is abnormal.

31. The system according to any one of claims 24 to 30, wherein
the first analytics network element is further configured to determine a packet detection rule PDR at the first level according to the exception detection policy at the first level, wherein the PDR at the first level is used to detect the first data, and the first request message comprises information indicating the PDR at the first level; and
the second analytics network element is further configured to determine a PDR at the second level according to the exception detection policy at the second level, wherein the PDR at the second level is used to detect the second data, and the second request message comprises information indicating the PDR at the second level.

32. A communication apparatus, comprising:
a memory, configured to store a computer program; and
a processor, configured to execute the computer program stored in the memory, to enable the communication apparatus to perform the method according to any one of claims 1 to 10, or perform the method according to any one of claims 11 to 14.

33. A computer-readable storage medium, wherein the computer-readable storage medium stores a computer program; and when the computer program is run by a communication apparatus, the apparatus is enabled to perform the method according to any one of claims 1 to 10, or perform the method according to any one of claims 11 to 14.

34. A chip system, comprising:
a processor, configured to invoke a computer program from a memory and run the computer program, to enable a communication apparatus on which the chip system is installed to perform the method according to any one of claims 1 to 10, or perform the method according to any one of claims 11 to 14.
